# EUROPEAN PATENT APPLICATION

(11) **EP 4 715 532 A1**
(43) Date of publication of application: **25.03.2026**
(21) Application number: 24811384.7
(22) Date of filing: 21.05.2024
(51) Int. Cl.: G06F 3/01, G06F 3/04842, G06F 3/00, G06F 1/16, H04W 4/80

(54) **WEARABLE ELECTRONIC DEVICE FOR DISPLAYING VIRTUAL OBJECT, OPERATING METHOD THEREOF, AND RECORDING MEDIUM**

(30) Priority: 25.05.2023 KR 20230067846; 12.07.2023 KR 20230090300
(71) Applicant: Samsung Electronics Co., Ltd., Suwon-si, Gyeonggi-do 16677 (KR)
(72) Inventor: LEE, Eunbin, Suwon-si Gyeonggi-do 16677 (KR)
(74) Representative: HGF
(86) International application number: PCT/KR2024/006859
(87) International publication number: WO 2024/242445

(57) **Abstract**

A wearable electronic device according to one embodiment of the present invention comprises, a memory for storing instructions, a camera, a communication circuit, a display, and a processor, wherein when executed by the processor, the instructions can be configured such that the wearable electronic device, display, through the display, a virtual first object indicating a user interface in a first area, based on sensing information acquired from a first controller related to the wearable electronic device through the communication circuit, identify whether the first controller is in use, based on identifying that the first controller is in use, identify whether a first condition for setting that a display position of the virtual first object is linked to the position of the first controller is satisfied, the first condition being based on a distance between the virtual first object and the first controller, based on identifying that the first condition is satisfied, display the virtual first object on a second area corresponding to the position of the first controller, the display position of the virtual first object being changed according to a changed position of the first controller when the position of the first controller is changed, based on identifying that the first controller is not in use, display the virtual first object in a third area corresponding to the position of the first controller identified through the camera based on that the first controller is placed on the ground, and based on identifying that the first condition is not satisfied while the first controller is in use, maintain the display position of the virtual first object in the first area.

## Description

### [Technical Field]

Embodiments of the disclosure relate to a wearable electronic device displaying virtual objects, an operation method thereof, and a recording medium.

### [Background Art]

An increasing number of services and additional features are being offered through wearable electronic devices such as augmented reality glasses (AR glasses), video see through (VST) devices, and head mounted display (HMD) devices. To meet the needs of various users and raise use efficiency of electronic devices, communication service carriers or device manufacturers are jumping into competitions to develop electronic devices with differentiated and diversified functionalities. Accordingly, various functions that are provided through wearable electronic devices are evolving more and more.

AR glasses or a VST device, when worn on the user's body, may provide a realistic experience to the user by displaying virtual images. AR glasses or VST devices can replace the usability of smartphones in a variety of areas, such as gaming entertainment, education, and social networking services. Through VST glasses or a VST device, users may be provided with life-like content and interact with it to feel like they are in a virtual world.

The above-described information may be provided as related art for the purpose of helping understanding of the disclosure. No claim or determination is made as to whether any of the foregoing is applicable as background art in relation to the disclosure.

### [Detailed Description of the Invention]

### [Technical Solution]

According to an embodiment, a wearable electronic device may include a memory storing instructions, a camera, a communication circuit, a display, and at least one processor.

According to an embodiment, the instructions may, when executed by the at least one processor, cause the wearable electronic device to display, through the display, a virtual first object representing a user interface in a first area.

According to an embodiment, the instructions may, when executed by the at least one processor, cause the wearable electronic device to identify whether the first controller is in use based on sensing information obtained from a first controller related to the wearable electronic device through the communication circuit.

According to an embodiment, the instructions may, when executed by the at least one processor, cause the wearable electronic device to, when the first controller is identified as being in use, identify whether a first condition for setting the display position of the virtual first object to synchronize with the position of the first controller identified through the camera is satisfied.

According to an embodiment, the first condition may be based on a distance between the virtual first object and the first controller.

According to an embodiment, the instructions may, when executed by the at least one processor, cause the wearable electronic device to, when the first condition is identified as being satisfied, display the virtual first object in a second area corresponding to the position of the first controller.

According to an embodiment, the instructions may, when executed by the at least one processor, cause the wearable electronic device to, when the position of the first controller is changed, change the display position of the virtual first object according to the changed position of the first controller.

According to an embodiment, the instructions may, when executed by the at least one processor, cause the wearable electronic device to, when the first controller is identified as not being in use, display the virtual first object in a third area corresponding to the position of the first controller identified through the camera based on a state in which the first controller is placed on the ground.

According to an embodiment, the instructions may, when executed by the at least one processor, cause the wearable electronic device to, when the first condition is identified as not being satisfied while the first controller is in use, maintain the display position of the first object in the first area.

According to an embodiment, a method of operating a wearable electronic device may include an operation of displaying a virtual first object representing a user interface in a first area through the display of the wearable electronic device.

According to an embodiment, the method of operating the wearable electronic device may include an operation of identifying whether the first controller is in use based on sensing information obtained from a first controller related to the wearable electronic device through the communication circuit of the wearable electronic device.

According to an embodiment, the method of operating the wearable electronic device may include an operation of, when the first controller is identified as being in use, identifying whether a first condition for setting the display position of the virtual first object to synchronize with the position of the first controller identified through the camera of the wearable electronic device is satisfied.

According to an embodiment, the method of operating the wearable electronic device may include an operation of, when the first condition is identified as being satisfied, displaying the virtual first object in a second area corresponding to the position of the first controller.

According to an embodiment, in the method of operating the wearable electronic device, when the position of the first controller is changed, the display position of the virtual first object may be changed according to the changed position of the first controller.

According to an embodiment, the method of operating the wearable electronic device may include an operation of, when the first controller is identified as not being in use, displaying the virtual first object in a third area corresponding to the position of the first controller identified through the camera based on a state in which the first controller is placed on the ground.

According to an embodiment, the method of operating the wearable electronic device may include an operation of, when the first condition is identified as not being satisfied while the first controller is in use, maintaining the display position of the virtual first object in the first area.

According to an embodiment, a non-transitory recording medium may store an instruction executable to display a virtual first object representing a user interface in a first area through the display of a wearable electronic device.

According to an embodiment, the non-transitory recording medium may store an instruction executable to identify whether the first controller is in use based on sensing information obtained from a first controller related to the wearable electronic device through the communication circuit of the wearable electronic device.

According to an embodiment, the non-transitory recording medium may store an instruction executable to, when the first controller is identified as being in use, identify whether a first condition for setting the display position of the virtual first object to synchronize with the position of the first controller identified through the camera of the wearable electronic device is satisfied.

According to an embodiment, the non-transitory recording medium may store an instruction executable to, when the first condition is identified as being satisfied, display the virtual first object in a second area corresponding to the position of the first controller.

According to an embodiment, in the non-transitory recording medium, when the position of the first controller is changed, the display position of the virtual first object may be changed according to the changed position of the first controller.

According to an embodiment, the non-transitory recording medium may store an instruction executable to, when the first controller is identified as not being in use, display the virtual first object in a third area corresponding to the position of the first controller identified through the camera based on a state in which the first controller is placed on the ground.

According to an embodiment, the non-transitory recording medium may store an instruction executable to, when the first condition is identified as not being satisfied while the first controller is in use, maintain the display position of the virtual first object in the first area.

### [Brief Description of Drawings]

FIG. 1 is a view illustrating an electronic device in a network environment according to an embodiment.
FIG. 2 is a perspective view illustrating an internal configuration of a wearable electronic device according to an embodiment of the disclosure.
FIGS. 3A and 3B are views illustrating front and rear surfaces of a wearable electronic device according to an embodiment.
FIG. 4A is a view illustrating a system including a wearable electronic device, a first controller, and a second controller according to an embodiment.
FIG. 4B is a view illustrating a screen displayed by a wearable electronic device according to an embodiment.
FIG. 4C is a view illustrating a state in which a first controller is facing toward a first object according to an embodiment.
FIG. 4D is a view illustrating a state in which a first controller is placed on the ground according to an embodiment.
FIG. 5 is a schematic block diagram illustrating a system including a wearable electronic device, a first controller, and a second controller according to an embodiment.
FIG. 6 is a flowchart illustrating an operation of a wearable electronic device determining a display position of a first object according to whether a first condition is satisfied according to an embodiment.
FIG. 7 is a flowchart illustrating an operation of a wearable electronic device determining a display position of a first object according to whether a second condition is satisfied according to an embodiment.
FIG. 8A is a flowchart illustrating an operation of a wearable electronic device determining a display position of a first object based on a distance between a first controller and the wearable electronic device and a distance between a second controller and the wearable electronic device according to an embodiment.
FIG. 8B is a flowchart illustrating an operation of a wearable electronic device determining a display position of a first object based on a usage frequency of a first controller and a usage frequency of a second controller according to an embodiment.
FIG. 9 is a flowchart illustrating an operation of a wearable electronic device adjusting an arrangement of a first object and a second object according to an embodiment.
FIG. 10 is a flowchart illustrating an operation of a wearable electronic device adjusting a display position of a first object according to an embodiment.
FIG. 11A is a view illustrating a screen displayed through a display by a wearable electronic device according to an embodiment.
FIG. 11B is a view illustrating an operation of a wearable electronic device determining a display position of a first object according to whether a first condition is satisfied according to an embodiment.
FIG. 11C is a view illustrating an operation of a wearable electronic device determining a display position of a first object according to whether a first condition is satisfied according to an embodiment.
FIG. 11D is a view illustrating an operation of a wearable electronic device determining a display position of a first object based on satisfying a first condition according to an embodiment.
FIG. 12 is a view illustrating an operation of a wearable electronic device not changing a display position of a first object based on not satisfying a first condition according to an embodiment.
FIG. 13A is a view illustrating an operation of a wearable electronic device determining a display position of a first object to an area corresponding to the position of a first controller according to an embodiment.
FIG. 13B is a view illustrating an operation of a wearable electronic device maintaining a display position of a first object in a first area based on not satisfying a second condition according to an embodiment.
FIG. 14A and FIG. 14B are views illustrating an operation of a wearable electronic device displaying an object for displaying a second object according to an embodiment.
FIG. 14C and FIG. 14D are views illustrating an operation of a wearable electronic device adjusting an arrangement of a first object and a second object when the first object and the second object are identified as overlapping according to an embodiment.
FIG. 15 is a view illustrating a screen displayed by a wearable electronic device through a display in a state in which a first controller and a third controller are not being used according to an embodiment.

### [Mode for Carrying out the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

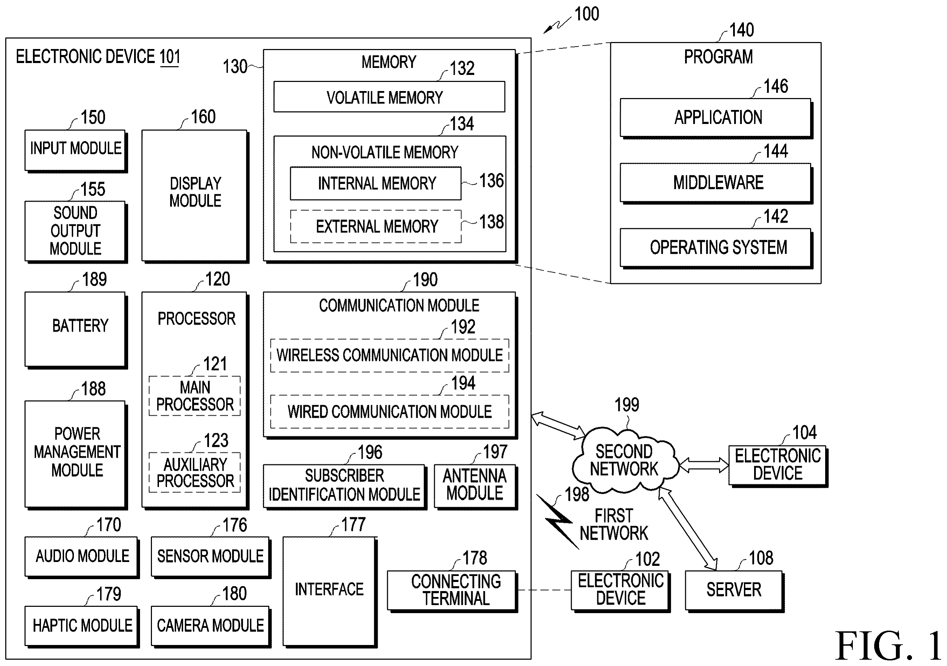

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

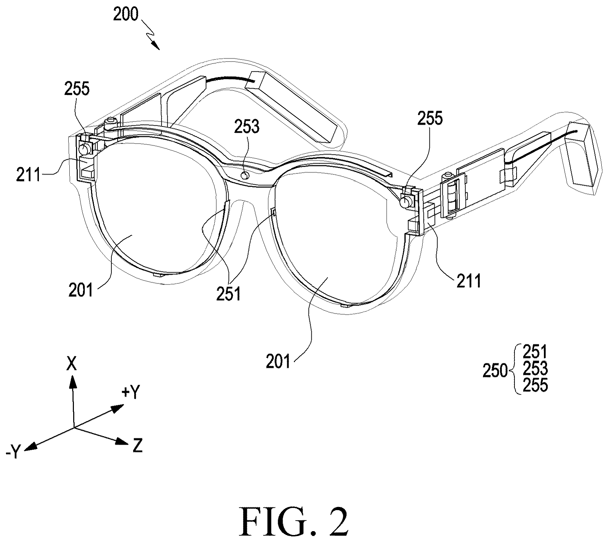

FIG. 2 is a perspective view illustrating an internal configuration of a wearable electronic device according to an embodiment of the disclosure.

Referring to FIG. 2, according to an embodiment of the disclosure, a wearable electronic device 200 may include at least one of a light output module 211, a display member 201, and a camera module 250.

According to an embodiment of the disclosure, the light output module 211 may include a light source capable of outputting an image and a lens guiding the image to the display member 201. According to an embodiment of the disclosure, the light output module 211 may include at least one of a liquid crystal display (LCD), a digital mirror device (DMD), a liquid crystal on silicon (LCoS), an organic light emitting diode (OLED), or a micro light emitting diode (micro LED).

According to an embodiment of the disclosure, the display member 201 may include an optical waveguide (e.g., a waveguide). According to an embodiment of the disclosure, the image output from the light output module 211 incident on one end of the optical waveguide may propagate inside the optical waveguide and be provided to the user. According to an embodiment of the disclosure, the optical waveguide may include at least one of at least one diffractive element (e.g., a diffractive optical element (DOE) or a holographic optical element (HOE)) or a reflective element (e.g., a reflective mirror). For example, the optical waveguide may guide the image output from the light output module 211 to the user's eyes using at least one diffractive element or reflective element.

According to an embodiment of the disclosure, the camera module 250 may capture still images and/or moving images. According to an embodiment, the camera module 250 may be disposed in a lens frame and may be disposed around the display member 201.

According to an embodiment of the disclosure, a first camera module 251 may capture and/or recognize the trajectory of the user's eye (e.g., pupil or iris) or gaze. According to an embodiment of the disclosure, the first camera module 251 may periodically or aperiodically transmit information related to the trajectory of the user's eye or gaze (e.g., trajectory information) to a processor (e.g., the processor 120 of FIG. 1).

According to an embodiment of the disclosure, a second camera module 253 may capture an external image.

According to an embodiment of the disclosure, a third camera module 255 may be used for hand detection and tracking, and recognition of the user's gesture (e.g., hand motion). According to an embodiment of the disclosure, the third camera module 255 may be used for 3 degrees of freedom (3DoF) or 6DoF head tracking, location (space, environment) recognition and/or movement recognition. The second camera module 253 may also be used for hand detection and tracking and recognition of the user's gesture. According to an embodiment of the disclosure, at least one of the first camera module 251 to the third camera module 255 may be replaced with a sensor module (e.g., a LiDAR sensor). For example, the sensor module may include at least one of a vertical cavity surface emitting laser (VCSEL), an infrared sensor, and/or a photodiode.

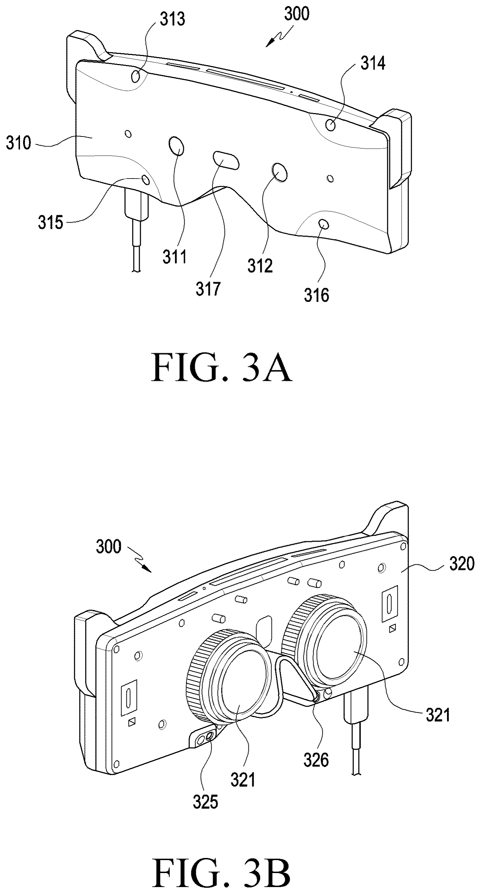

FIGS. 3A and 3B are views illustrating front and rear surfaces of a wearable electronic device according to an embodiment.

Referring to FIGS. 3A and 3B, in an embodiment, camera modules 311, 312, 313, 314, 315, and 316 and/or a depth sensor 317 for obtaining information related to the ambient environment of the wearable electronic device 300 may be disposed on the first surface 310 of the housing.

In an embodiment, the camera modules 311 and 312 may obtain images related to the ambient environment of the wearable electronic device.

In an embodiment, the camera modules 313, 314, 315, and 316 may obtain images while the wearable electronic device is worn by the user. The camera modules 313, 314, 315, and 316 may be used for hand detection, tracking, and recognition of the user gesture (e.g., hand motion). The camera modules 313, 314, 315, and 316 may be used for 3DoF or 6DoF head tracking, location (space or environment) recognition, and/or movement recognition. In an embodiment, the camera modules 311 and 312 may be used for hand detection and tracking and recognition of the user's gesture.

In an embodiment, the depth sensor 317 may be configured to transmit a signal and receive a signal reflected from an object and be used for identifying the distance to the object, such as time of flight (TOF). Alternatively or additionally to the depth sensor 217, the camera modules 313, 314, 315, and 316 may identify the distance to the object.

According to an embodiment, camera modules 325 and 326 for face recognition and/or a display 321 (and/or lens) may be disposed on the second surface 320 of the housing.

In an embodiment, the face recognition camera modules 325 and 326 adjacent to the display may be used for recognizing the user's face or may recognize and/or track both eyes of the user.

In an embodiment, the display 321 (and/or lens) may be disposed on the second surface 320 of the wearable electronic device 300. In an embodiment, the wearable electronic device 300 may not include the camera modules 315 and 316 among the plurality of camera modules 313, 314, 315, and 316. Although not shown in FIGS. 3A and 3B, the wearable electronic device 300 may further include at least one of the components shown in FIG. 2.

As described above, according to an embodiment, the wearable electronic device 300 may have a form factor to be worn on the user's head. The wearable electronic device 300 may further include a strap and/or a wearing member to be fixed on the user's body part. The wearable electronic device 300 may provide the user experience based on augmented reality, virtual reality, and/or mixed reality while worn on the user's head.

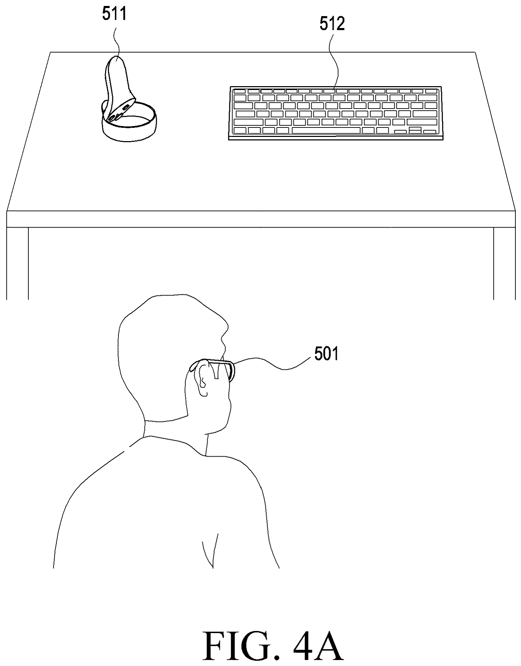

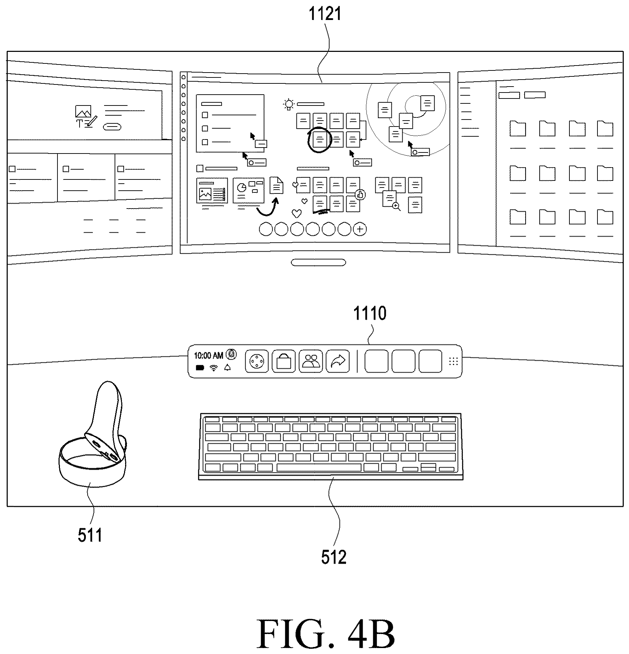

FIG. 4A is a view illustrating a system including a wearable electronic device, a first controller, and a second controller according to an embodiment. FIG. 4B is a view illustrating a screen displayed by a wearable electronic device according to an embodiment.

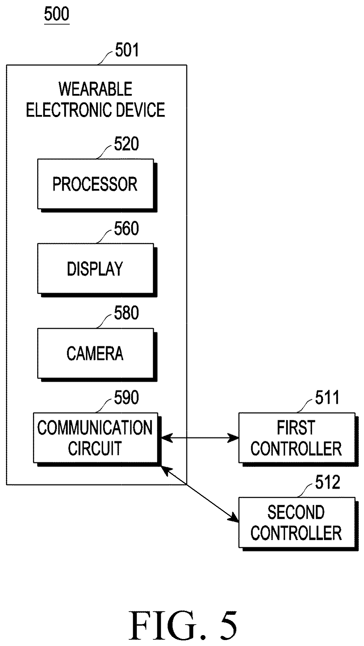

Referring to FIG. 4A, according to an embodiment, a system 500 (e.g., the system 500 of FIG. 5) may include a wearable electronic device 501 (e.g., the wearable electronic device 501 of FIG. 5), a first controller 511 (e.g., the first controller 511 of FIG. 5), and a second controller 512 (e.g., the second controller 512). For example, the first controller 511 may be a pointing device or an input control device of the wearable electronic device 501. For example, the second controller 512 may be a keyboard or a mouse.

According to an embodiment, the wearable electronic device 501 may be worn by a user. For example, the wearable electronic device 501 may be implemented as either augmented reality (AR) glasses or a video see through (VST) device. According to an embodiment, the wearable electronic device 501 may display a virtual object or a virtual execution screen through a display 560 (e.g., the display 560 of FIG. 5) in a state of being worn by the user. According to an embodiment, the wearable electronic device 501 may adjust a position where the virtual object or the virtual execution screen is displayed by the first controller 511 and/or the second controller 512.

Referring to FIG. 4B, according to an embodiment, the wearable electronic device 501 may display a virtual first object 1110 (hereinafter, the first object 1110) representing a user interface and a virtual execution screen 1121 representing an execution screen of an application through the display 560 in a state in which the wearable electronic device 501 is worn by the user. According to an embodiment, the wearable electronic device 501 may display the first object 1110 in a first area. For example, the first object 1110 and the execution screen 1121 may be augmented reality images displayed over a real area. In this case, the first area may be an area of the real area viewed through the glasses. Alternatively, the first area may be an area of the real area displayed on the display 560 through a camera included in the wearable electronic device 501. According to the implementation, the first object 1110 and the execution screen 1121 may be virtual objects displayed over a virtual area. In this case, the first area may be an area of the virtual area viewed through the display 560.

According to an embodiment, the wearable electronic device 501 may change the display position of the first object 1110 displayed through the display 560 from the first area to an area corresponding to the position of either the first controller 511 or the second controller 512. According to an embodiment, the wearable electronic device 501 may cause the display position of the first object 1110 to synchronize with the position of the corresponding controller. For example, the wearable electronic device 501 may change the display position of the first object 1110 from the first area to an area corresponding to the position of the first controller 511 when a condition based on a distance between the virtual first object 1110 and the actual first controller 511 (e.g., the distance viewed through the glasses or the display 560) is satisfied while the first controller 511 is in use. For example, the wearable electronic device 501 may change the display position of the first object 1110 from the first area to an area corresponding to the position of the first controller 511 when a condition based on a state in which the first controller 511 is placed on the ground is satisfied while the first controller 511 is not in use. According to the implementation, according to an embodiment, the wearable electronic device 501 may not change the display position of the execution screen 1121 displayed through the display 560. For example, the wearable electronic device 501 may determine not to change the display position of a specific object according to a user's setting. For example, the wearable electronic device 501 may not change the display position of the execution screen 1121 while changing the display position of the first object 1110. Alternatively, the wearable electronic device 501 may change both the display position of the first object 1110 and the display position of the execution screen 1121, or may not change both.

Conventionally, a wearable electronic device could display a first object representing a user interface in a fixed first area. In other words, a conventional wearable electronic device could display the first object in the fixed first area when the controller is not in use. In this case, the conventional wearable electronic device could control functions or operations of the wearable electronic device according to gestures or interactions using the user's hand. However, the user of the wearable electronic device could see the first object displayed in the fixed first area in a state covered by the user's hand. Accordingly, the user of the wearable electronic device had the inconvenience of not being able to see the first object well when controlling functions or operations of the wearable electronic device according to gestures or interactions using the user's hand. Further, even when the user of the wearable electronic device controlled functions or operations of the wearable electronic device using a controller, the first object could be covered by the controller.

According to an embodiment, the wearable electronic device 501 may change the display position of the first object 1110 from the originally displayed first area to an area corresponding to the position of either the first controller 511 or the second controller 512. Accordingly, the wearable electronic device 501 may display the first object 1110 in a state not covered by the user's hand when performing interactions with the user's hand. Further, the wearable electronic device 501 may display the first object 1110 in a state not covered by the controller (511 or 512) even when controlling functions or operations of the wearable electronic device 501 using the controller (511 or 512).

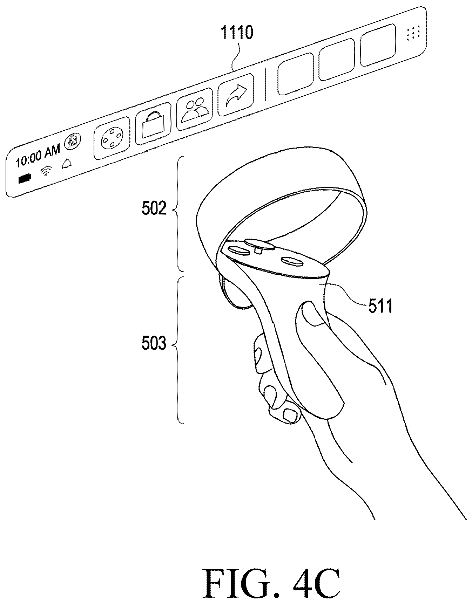

FIG. 4C is a view illustrating a state in which a first controller is facing toward a first object according to an embodiment.

Referring to FIG. 4C, according to an embodiment, the wearable electronic device 501 (e.g., the wearable electronic device 501 of FIG. 5) may change the display position of the first object 1110 from the first area to an area corresponding to the first controller 511 when a condition based on the distance between the first object 1110 and the first controller 511 is satisfied while the first controller 511 (e.g., the first controller 511 of FIG. 5) is in use.

According to an embodiment, the condition based on the distance between the first object 1110 and the first controller 511 may mean that one surface of the first controller 511 faces the first object 1110 and the one surface of the first controller 511 is positioned within a designated distance from the first object 1110. For example, the one surface of the first controller 511 may mean an upper portion 502 of the first controller 511, and another surface of the first controller 511 may mean a lower portion 503 of the first controller 511. For example, the lower portion 503 of the first controller 511 may mean a portion gripped by a hand (or fingers) of the user wearing the wearable electronic device 501. However, this is an example, and the one surface of the first controller 511 is not limited to the upper portion 502 of the first controller 511, and the other surface of the first controller 511 is not limited to the lower portion 503 of the first controller 511.

According to an embodiment, the form and type of the first controller 511 shown in FIG. 4C is an example for convenience of description, and the technical spirit of the disclosure is not limited thereto. The form and type of the first controller 511 may be applied in various ways.

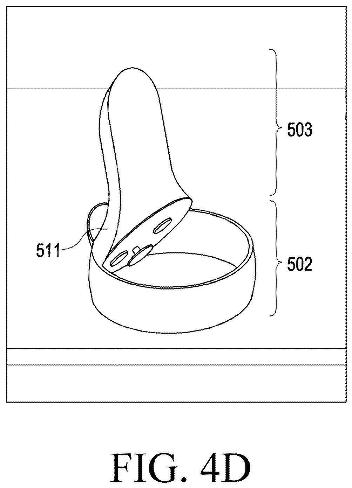

FIG. 4D is a view illustrating a state in which a first controller is placed on the ground according to an embodiment.

Referring to FIG. 4D, according to an embodiment, the wearable electronic device 501 (e.g., the wearable electronic device 501 of FIG. 5) may change the display position of the first object 1110 from the first area to an area corresponding to the first controller 511 when a condition based on a state in which the first controller 511 (e.g., the first controller 511 of FIG. 5) is placed on the ground is satisfied while the first controller 511 is not in use.

According to an embodiment, the condition based on the state in which the first controller 511 is placed on the ground may mean a state in which one surface of the first controller 511 contacts the ground and another surface of the first controller 511 does not contact the ground. For example, the one surface of the first controller 511 may mean an upper portion 502 of the first controller 511, and another surface of the first controller 511 may mean a lower portion 503 of the first controller 511. However, this is an example, and the one surface of the first controller 511 is not limited to the upper portion 502 of the first controller 511, and the other surface of the first controller 511 is not limited to the lower portion 503 of the first controller 511.

According to an embodiment, the form and type of the first controller 511 shown in FIG. 4D is an example for convenience of description, and the technical spirit of the disclosure is not limited thereto. The form and type of the first controller 511 may be applied in various ways.

FIG. 5 is a schematic block diagram illustrating a system including a wearable electronic device and a first controller and a second controller according to an embodiment.

According to an embodiment, the system 500 may include a wearable electronic device 501, a first controller 511, and a second controller 512. However, the number and/or type of controllers are not limited thereto. For convenience of description, hereinafter, the system 500 is described as including the first controller 511 and the second controller 512. For example, the wearable electronic device 501 may be implemented as either augmented reality (AR) glasses or a video see through (VST) device. For example, the first controller 511 may be a pointing device or an input control device of the wearable electronic device 501. The first controller 511 may be collectively referred to as an input device for augmented reality (AR) glasses, a video see through (VST) device, or an extended reality (XR) device. For example, the second controller 512 may be a keyboard or a mouse. For example, the wearable electronic device 501 may change the display position of a virtual object displayed through the display 560 of the wearable electronic device 501 from the originally displayed area to an area corresponding to the position of either the first controller 511 or the second controller 512 when a specific condition is satisfied.

According to an embodiment, the wearable electronic device 501 may include a memory (not illustrated), a processor 520, a display 560, a camera 580, and a communication circuit 590. According to an embodiment, the wearable electronic device 501 may be implemented to be identical or similar to the electronic device 101 of FIG. 1, the wearable electronic device 200 of FIG. 2, or the wearable electronic device 300 of FIG. 3.

The processor 520, the display 560, the camera 580, and the communication circuit 590 may be electrically and/or operatively coupled with each other by an electronic component such as a communication bus (not illustrated).

In an embodiment, the hardware of the wearable electronic device 501 being operatively coupled may mean that a direct connection or an indirect connection between the hardware is established wired or wirelessly such that the second hardware is controlled by the first hardware among the hardware.

According to an embodiment, the processor 520 may control the overall operation of the wearable electronic device 501. For example, the processor 520 may be implemented to be identical or similar to the processor 120 of FIG. 1.

According to an embodiment, when the wearable electronic device 501 is implemented as AR glasses, the display 560 may be implemented as a light output device (e.g., the display member 201 of FIG. 2) for displaying content or objects through the glasses. Alternatively, when the wearable electronic device 501 is implemented as a VST device, the display 560 may be implemented as a device (e.g., the display 321 of FIGS. 3A and 3B) that displays a screen on the display.

According to an embodiment, the processor 520 may communicatively connect with the first controller 511 and the second controller 512 through the communication circuit 590. The processor 520 may communicatively connect with the first controller 511 and the second controller 512 using short-range communication technology (e.g., Bluetooth low energy (BLE) or Wi-Fi) through the communication circuit 590.

According to an embodiment, the processor 520 may display a first object (e.g., the first object 1110 of FIG. 4) representing a user interface in a first area through the display 560. The first object 1110 means a virtual object. For example, the user interface may include a default menu or a universal menu provided by the wearable electronic device 501. For example, the universal menu may include a menu capable of executing a function for running applications installed on the wearable electronic device 501, a function for displaying devices communicatively connected to the wearable electronic device 501 (e.g., the first controller 511, the second controller 512), and a function for displaying the battery remaining amount of the wearable electronic device 501. However, this is an example, and the universal menu may include menus providing other various functions.

According to an embodiment, the processor 520 may identify whether the first controller 511 and the second controller 512 are in use. According to an embodiment, the processor 520 may identify that the first controller 511 is not in use when it is identified that the first controller 511 has not moved for a designated time. According to an embodiment, the processor 520 may identify whether the first controller 511 is in use based on sensing information obtained through a sensor included in the first controller 511. For example, the sensing information may include acceleration sensor information and/or gyro sensor information. According to an embodiment, the processor 520 may identify that the first controller 511 is not in use when it is identified through the camera 580 that the first controller 511 is placed on the ground. According to an embodiment, the processor 520 may identify that the second controller 512 is not in use when it is identified that there has been no input to the second controller 512 for a designated time. According to an embodiment, the processor 520 may identify that the second controller 512 is not in use when input information for the wearable electronic device 501 is not obtained from the second controller 512 for a designated time through the communication circuit 590.

According to an embodiment, the processor 520 may identify whether the first controller 511 is in a state gripped by a user based on sensing information obtained through a grip sensor included in the first controller 511. However, this is an example, and the first controller 511 of the disclosure may identify whether it is in a state gripped by a user through various sensors capable of identifying whether it is in a state gripped by a user. According to an embodiment, the processor 520 may identify whether the first controller 511 is in use based on sensing information obtained through the grip sensor included in the first controller 511 and sensing information (e.g., acceleration sensor information and/or gyro sensor information) obtained through the sensor (e.g., acceleration sensor, gyro sensor) included in the first controller 511. For example, the processor 520 may identify that the first controller 511 is in use when determining that the first controller 511 is in a state gripped by a user and the first controller 511 is in a moving state. For example, the processor 520 may identify that the first controller 511 is not in use when determining that the first controller 511 is not in a state gripped by a user and the first controller 511 is in a moving state. According to an embodiment, a state in which the first controller 511 is not gripped by a user and the first controller 511 is moving may mean a state in which the position of the first controller 511 is being changed with the user's body in contact with the first controller 511 without gripping the first controller 511.

For example, the first controller 511 may obtain a first sensing value through the grip sensor included in the first controller 511. According to an embodiment, the processor 520 may identify that the user's body (e.g., hand or fingers) is not close to the first controller 511 when the first sensing value is less than a first threshold. According to an embodiment, the processor 520 may identify that the user's body (e.g., hand or fingers) is close to or in contact with the first controller 511 when the first sensing value is greater than the first threshold and less than a second threshold. Here, the second threshold may mean a value greater than the first threshold. According to an embodiment, the processor 520 may identify that the first controller 511 is gripped by the user's body (e.g., hand or fingers) when the first sensing value is greater than the second threshold. For example, the first threshold may mean a preset value for determining whether the user's body contacts or close to the first controller 511. The second threshold may mean a preset value for determining whether the user's body is gripping the first controller 511. The first threshold and the second threshold may be automatically set by the processor 520 or set by the user.

According to an embodiment, when it is identified that the first controller 511 is in use, the processor 520 may identify whether a first condition for setting the display position of the first object 1110 to synchronize with the position of the first controller 511 is satisfied. The first condition may be based on a distance between the first object and the first controller 511. For example, setting the display position of the first object 1110 to synchronize with the position of the first controller 511 may mean setting the display position of the first object to be changed according to the changed position of the first controller 511 when the position of the first controller 511 is changed.

According to an embodiment, the processor 520 may identify that the first condition is satisfied when it is identified that one surface of the first controller 511 faces the first object and the one surface is positioned within a designated first distance from the first object 1110. According to an embodiment, when it is identified that the first condition is satisfied, the processor 520 may display the first object 1110 in a second area corresponding to the position of the first controller 511 identified through the camera 580. In this case, the processor 520 may apply a visual effect as if the first object 1110 sticks around the first controller 511. For example, the one surface of the first controller 511 may mean the upper portion of the first controller 511 (e.g., the upper portion 502 of the first controller of FIG. 4). However, this is an example, and the one surface of the first controller 511 is not limited to the upper portion 502 of the first controller 511. For example, the designated first distance may mean a reference distance for setting the display position of the first object 1110 to synchronize with the position of the first controller 511. For example, the designated first distance may mean a distance (e.g., 2cm) where the one surface of the first controller 511 is determined to be close to the first object 1110. The designated first distance may be automatically set by the processor 520 or set by the user.

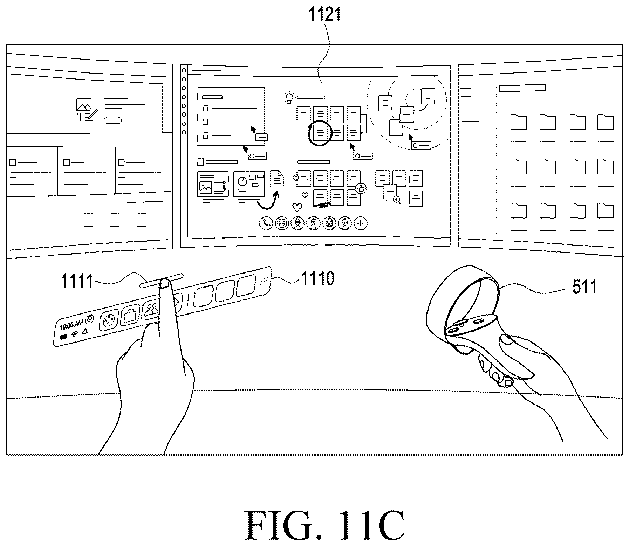

According to an embodiment, the processor 520 may also identify that the first condition is satisfied when it is identified that the display position of the first object 1110 moves within a designated second distance from the first controller 511. According to an embodiment, the first object 1110 may include a handler (e.g., 1111 of FIG. 11C) capable of changing the display position of the first object 1110. For example, the handler 1111 may be a virtual object displayed on the first object 1110. According to an embodiment, the processor 520 may move the display position of the first object 1110 based on an input through the handler 1111 (e.g., a gesture or interaction of grabbing and moving the handler). According to an embodiment, the processor 520 may identify whether the display position of the first object 1110 moves within the designated second distance from the first controller 511. The input may include a drag input for moving the display position of the first object 1110 from the first area to a specific area corresponding to a specific position using the handler 1111. However, this is an example, and the input may include various types of inputs. For example, the designated second distance may mean a distance where the first object 1110 is determined to be close to the first controller 511. The designated second distance may be set by the processor 520. According to the implementation, the designated first distance and the designated second distance may be set to be the same as or different from each other.

According to an embodiment, when it is identified that the first condition is not satisfied while the first controller 511 is in use, the processor 520 may maintain the display position of the first object in the first area. According to an embodiment, the processor 520 may identify that the first condition is not satisfied when the one surface of the first controller 511 does not face the first object 1110 or the one surface is not positioned within the designated first distance from the first object 1110. For example, the processor 520 may identify that the first condition is not satisfied when it is identified that the lower portion of the first controller 511 (e.g., the lower portion 503 of the first controller of FIG. 4) faces the first object.

According to an embodiment, when it is identified that the first controller 511 is not in use, the processor 520 may identify whether a state in which the first controller 511 is placed on the ground satisfies a designated second condition through the camera 580. According to an embodiment, when it is identified that the second condition is satisfied, the processor 520 may display the first object 1110 in a third area corresponding to the position of the first controller 511. According to an embodiment, when it is identified that the state placed on the ground does not satisfy the designated second condition, the processor 520 may maintain the display position of the first object 1110 in the first area. For example, the second condition may mean a state in which one surface of the first controller 511 contacts the ground and another surface of the first controller 511 does not contact the ground. For example, the one surface of the first controller 511 may mean an upper portion 502 of the first controller 511, and another surface of the first controller 511 may mean a lower portion 503 of the first controller 511. However, this is an example, and the one surface of the first controller 511 is not limited to the upper portion 502 of the first controller 511, and the other surface of the first controller 511 is not limited to the lower portion 503 of the first controller 511.

According to an embodiment, the processor 520 may identify at a first time that the first controller 511 is not moving in a state in which the first controller 511 is not gripped by a user. According to an embodiment, when it is identified that the second condition is satisfied at the first time, the processor 520 may display the first object 1110 in the third area corresponding to the position of the first controller 511. According to an embodiment, the processor 520 may identify at a second time after the first time that the first controller 511 is moving in a state in which the first controller 511 is not gripped by a user. In this case, the processor 520 may identify whether the first controller 511 is in a moving state while the state in which the first controller 511 is placed on the ground satisfies the designated second condition. When it is identified that the first controller 511 is in a moving state while the state in which the first controller 511 is placed on the ground satisfies the designated second condition, the processor 520 may display the first object 1110 in the third area corresponding to the position of the first controller 511 at the time when the movement of the first controller 511 ends.

According to an embodiment, when it is identified that the first controller 511 and the second controller 512 are not in use, the processor 520 may determine the display position of the first object 1110 as the third area corresponding to the position of the first controller 511 or a fourth area corresponding to the position of the second controller 512. According to an embodiment, when it is identified that the second condition is satisfied, the processor 520 may determine the display position of the first object 1110 by comparing the usage frequency of the first controller 511 and the usage frequency of the second controller 512, or the distance between the first controller 511 and the wearable electronic device 501 and the distance between the second controller 512 and the wearable electronic device 501. According to an embodiment, when it is identified that the second condition is satisfied, the processor 520 may determine an area corresponding to the position of a preset one of the first controller 511 and the second controller 512 as the display position of the first object 1110.

For example, the processor 520 may display the first object in the third area corresponding to the position of the first controller 511 having a higher usage frequency out of the first controller 511 and the second controller 512. The usage frequency may mean the frequency where the first controller 511 and the second controller 512 are used as input devices for the wearable electronic device 501. For example, the processor 520 may display the first object 1110 in the third area corresponding to the position of the first controller 511 having a closer distance to the wearable electronic device 501 out of the first controller 511 and the second controller 512. For example, when the area corresponding to the position of the second controller 512 is preset as the display position of the first object 1110, the processor 520 may display the first object 1110 in the fourth area corresponding to the position of the second controller 512. For example, when the area corresponding to the position of the first controller 511 is preset as the display position of the first object 1110, the processor 520 may display the first object 1110 in the third area corresponding to the position of the first controller 511. According to the implementation, the processor 520 may display the first object in the fourth area corresponding to the position of the second controller 512 having a lower usage frequency out of the first controller 511 and the second controller 512.

According to the implementation, the processor 520 may display the first object 1110 in the fourth area corresponding to the position of the second controller 512 having a farther distance from the wearable electronic device 501 out of the first controller 511 and the second controller 512. According to the implementation, the processor 520 may display the first object 1110 in the fourth area corresponding to the position of the second controller 512 having a lower usage frequency out of the first controller 511 and the second controller 512.

According to an embodiment, when it is identified that the first controller 511 and the second controller 512 are not in use and the state in which the first controller 511 is placed on the ground does not satisfy the designated second condition, the processor 520 may maintain the display position of the first object 1110 in the first area. According to the implementation, when it is identified that the first controller 511 and the second controller 512 are not in use and the state in which the first controller 511 is placed on the ground does not satisfy the designated second condition, the processor 520 may display the first object 1110 in the fourth area corresponding to the second controller 512.

According to an embodiment, when a command for changing the display position of the first object 1110 being displayed in the third area to the fourth area is identified, the processor 520 may change the display position of the first object from the third area to the fourth area. For example, the processor 520 may identify an input for displaying the first object 1110 in the fourth area. For example, the input may mean a drag input or a pinch input. However, this is an example, and embodiments of the disclosure may include various inputs. According to an embodiment, when the input is identified, the processor 520 may change the display position of the first object 1110 from the third area to the fourth area.

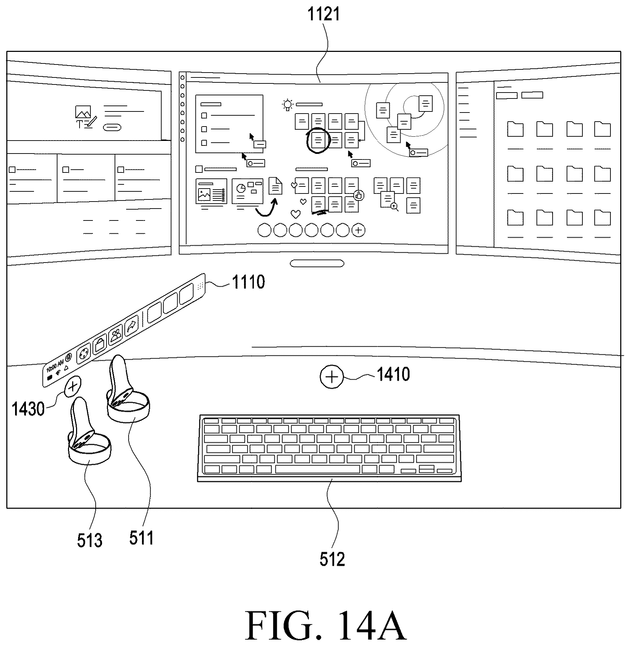

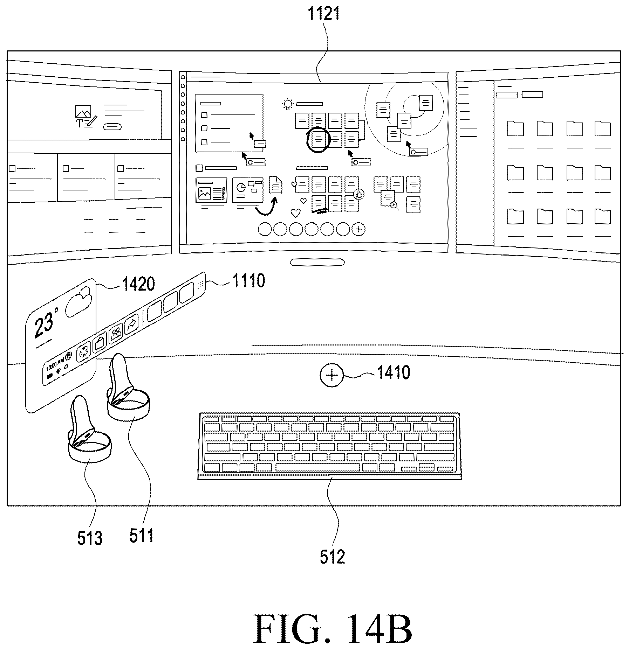

According to an embodiment, the processor 520 may display the first object 1110 in the third area based on the display position of the first object 1110 being determined to be the third area, and may display the second object 1420 in the fourth area based on a command to display a second object (e.g., 1420 of FIG. 14B) in the fourth area. For example, the processor 520 may display an object (e.g., 1410 of FIG. 14A) for displaying the second object 1420 in the fourth area. When an input for the object 1410 for displaying the second object 1420 is identified, the processor 520 may display the second object 1420 in the fourth area. For example, the second object 1420 may include a widget or an execution screen of an application installed on the wearable electronic device 501. However, the second object is not limited thereto.

According to an embodiment, a portion of the first object 1110 and a portion of the second object 1420 may be displayed overlapping through the display 560. For example, when a portion of the first object 1110 and a portion of the second object 1420 overlap, the portion of the first object 1110 may be displayed over the portion of the second object 1420, or the portion of the second object 1420 may be displayed over the portion of the first object 1110.

According to an embodiment, when a portion of the first object 1110 and a portion of the second object 1420 are displayed overlapping, the processor 520 may identify the gaze of the user wearing the wearable electronic device 501 through the camera 580 for a designated time. According to an embodiment, the processor 520 may adjust the arrangement of the first object 1110 or the second object 1420 based on the user's gaze.

For example, when it is identified that the user's gaze is directed toward the first object 1110, the processor 520 may display the portion of the first object 1110 over the portion of the second object 1420. For example, when it is identified that the user's gaze is directed toward the second object 1420, the processor 520 may display the portion of the second object 1420 over the portion of the first object 110. For example, the processor 520 may adjust the position where the first object 1110 or the second object 1420 is displayed so that the first object 1110 and the second object 1420 do not overlap. For example, the processor 520 may move the first object 1110 or the second object 1420 in any one of the up, down, left, or right directions so that the first object 1110 and the second object 1420 do not overlap.

According to the implementation, according to an embodiment, the processor 520 may identify that the body (e.g., hand) of the user wearing the wearable electronic device 501 is approaching the first controller 511 or the second controller 512. According to the implementation, according to an embodiment, the processor 520 may identify that the body (e.g., hand) of the user wearing the wearable electronic device 501 is approaching the first object 1110 or the second object 1420. According to an embodiment, when it is identified that the user's body is approaching the first controller 511 or the first object 1110, the processor 520 may display the portion of the first object 1110 over the portion of the second object 1420. According to an embodiment, when it is identified that the user's body is approaching the second controller 512 or the second object 1420, the processor 520 may display the portion of the second object 1420 over the portion of the first object 110. For example, the processor 520 may identify that the user's body is approaching the first controller 511 or the first object 1110 when the user's body is positioned within a designated third distance from the first controller 511 or the first object 1110. For example, the processor 520 may identify that the user's body is approaching the second controller 512 or the second object 1420 when the user's body is positioned within the designated third distance from the second controller 512 or the second object 1420. According to the implementation, the designated third distance may be set to be the same as or different from the designated first distance or the designated second distance.

According to an embodiment, the processor 520 may identify an input for the first object 1110 to adjust the display position of the first object 1110 from a position corresponding to the third area to a specific position. For example, the input for the first object 1110 may include a drag input for moving the first object 1110 from the third area to a specific position using the handler 1111. According to an embodiment, when a drag input for the first object 1110 is identified, the processor 520 may apply a visual effect representing the movement of the first object 1110 to the first object 1110. For example, the visual effect may be applied until the drag input is released. For example, the visual effect may include an effect of blurring the first object 1110. According to an embodiment, when the input for the first object 1110 is released, the processor 520 may identify a third distance between the position of the first object 1110 moved by the drag input and the position of the first controller 511. According to an embodiment, the processor 520 may identify whether the third distance is greater than a designated fourth distance. For example, the designated fourth distance may be automatically set by the processor 520 or set by the user. According to an embodiment, when it is identified that the third distance is greater than the designated fourth distance, the processor 520 may maintain the display position of the first object 1110 in the third area. According to an embodiment, when it is identified that the third distance is not greater than the designated fourth distance, the processor 520 may display the first object 1110 at the position moved by the drag input. According to the implementation, the designated fourth distance may be set to be the same as or different from the designated first distance, the designated second distance, or the designated third distance.

According to an embodiment, operations performed by the first controller 511 may be performed by the second controller 512, and operations performed by the second controller 512 may be performed by the first controller 511.

The operations of the wearable electronic device 501 described in the drawings may be performed by the processor 520. However, for convenience of description, it is described that the operations performed by the processor 520 are performed by the wearable electronic device 501.

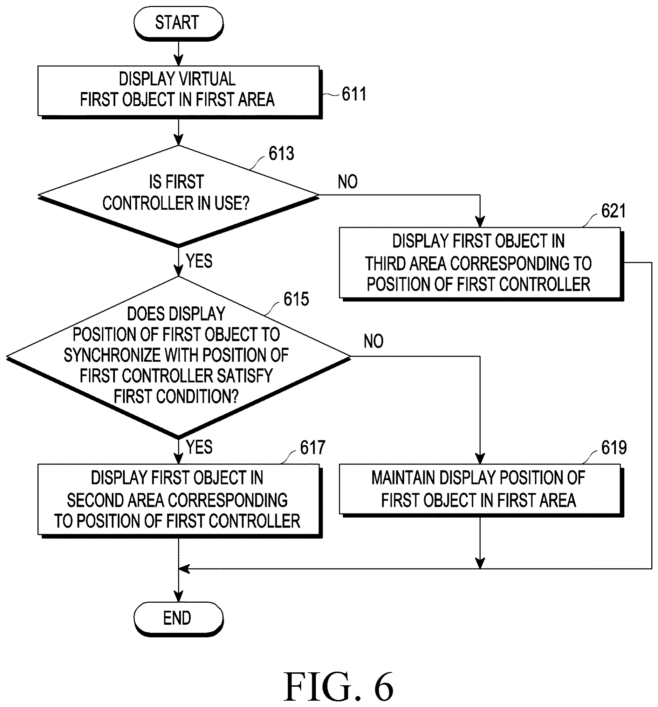

FIG. 6 is a flowchart illustrating an operation of a wearable electronic device determining a display position of a first object according to whether a first condition is satisfied according to an embodiment.

In the following embodiment, each operation may be performed sequentially, but is not necessarily performed sequentially. For example, the order of the operations may be changed, and at least two operations may be performed in parallel.

According to an embodiment, the wearable electronic device 501 (e.g., the wearable electronic device 501 of FIG. 5) may communicatively connect with the first controller 511 (e.g., the first controller 511 of FIG. 5) of the wearable electronic device 501.

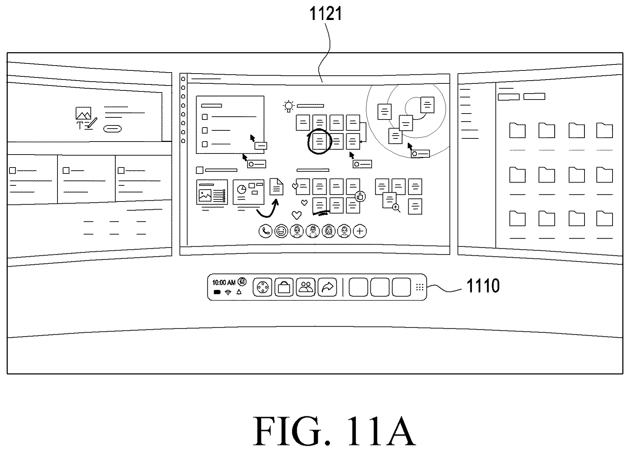

Referring to FIG. 6, according to an embodiment, in operation 611, the wearable electronic device 501 may display the first object (1110 of FIG. 11A) in a first area through the display 560 (e.g., the display 560 of FIG. 5). According to an embodiment, the first object 1110 may mean a virtual object representing a user interface. For example, the user interface may include a default menu or a universal menu provided by the wearable electronic device 501. For example, the universal menu may include a menu capable of executing a function for running applications installed on the wearable electronic device 501, a function for displaying devices communicatively connected to the wearable electronic device 501 (e.g., the first controller 511, the second controller 512), and/or a function for displaying the battery remaining amount of the wearable electronic device 501. However, this is an example, and the universal menu may include other various functions.

According to an embodiment, in operation 613, the wearable electronic device 501 may identify whether the first controller 511 (e.g., the first controller 511 of FIG. 5) is in use. According to an embodiment, the wearable electronic device 501 may obtain sensing information obtained by a sensor of the first controller 511 through the communication circuit 590 (e.g., the communication circuit 590 of FIG. 5). According to an embodiment, the wearable electronic device 501 may identify whether the first controller 511 is in use based on the sensing information. For example, the sensing information may include acceleration sensor information and/or gyro sensor information. According to an embodiment, the wearable electronic device 501 may identify that the first controller 511 is not in use when it is identified through the camera 580 (e.g., the camera 580 of FIG. 5) that the first controller 511 is placed on the ground. According to an embodiment, the wearable electronic device 501 may identify that the first controller 511 is not in use when it is identified that the first controller 511 is not moving.

According to an embodiment, the wearable electronic device 501 may identify whether the first controller 511 is in a state gripped by a user and whether the first controller 511 is in a moving state. For example, the wearable electronic device 501 may identify whether the first controller 511 is in a state gripped by a user through a grip sensor included in the first controller 511. According to an embodiment, the wearable electronic device 501 may identify that the first controller 511 is not in use when the first controller 511 is not in a state gripped by a user and the first controller 511 is in a moving state. According to an embodiment, when the first controller 511 is in a state gripped by a user and the first controller 511 is in a moving state, it may be identified that the first controller 511 is in use.

According to an embodiment, when it is identified that the first controller 511 is not in use (operation 613-No), in operation 621, the wearable electronic device 501 may display the first object in a third area corresponding to the position of the first controller 511. According to an embodiment, the wearable electronic device 501 may identify the position of the first controller 511 through the camera 580 (e.g., the camera 580 of FIG. 5).

According to an embodiment, when it is identified that the first controller 511 is in use (operation 613-Yes), in operation 615, the wearable electronic device 501 may identify whether a first condition for setting the display position of the first object 1110 to synchronize with the position of the first controller 511 is satisfied. According to an embodiment, the first condition may be a condition based on a distance between the first object 1110 and the first controller 511. For example, when it is identified that the distance between the first object 1110 and the first controller 511 is within a designated distance, the wearable electronic device 501 may identify or determine that the first condition is satisfied. According to an embodiment, the operation of setting the display position of the first object 1110 to synchronize with the position of the first controller 511 may mean an operation of setting the display position of the first object 1110 to be changed according to the changed position of the first controller 511 when the position of the first controller 511 is moved.

According to an embodiment, the wearable electronic device 501 may identify that the first condition is satisfied when it is identified that one surface of the first controller 511 faces the first object 1110 and the one surface of the first controller 511 is positioned within a designated distance from the first object 1110. For example, the one surface of the first controller 511 may mean the upper portion of the first controller 511 (e.g., the upper portion 502 of the first controller of FIG. 4). However, this is an example, and the one surface of the first controller 511 is not limited to the upper portion 502. For example, the designated distance may mean a reference distance for setting the display position of the first object 1110 to synchronize with the position of the first controller 511. For example, the designated distance may mean a distance (e.g., 2cm) where the first controller 511 is determined to be close to the first object. The designated distance may be automatically set by the processor 520 or set by the user.

According to an embodiment, the wearable electronic device 501 may also identify that the first condition is satisfied when it is identified that the display position of the first object 1110 moves within a designated distance from the first controller 511. According to an embodiment, the first object 1110 may include a handler (1111 of FIG. 11C) capable of moving the display position of the first object 1110. For example, the handler may be a virtual object displayed on the first object. According to an embodiment, the wearable electronic device 501 may move the display position of the first object 1110 based on an input through the handler 1111 (e.g., a gesture or interaction of grabbing and moving the handler).

According to an embodiment, when it is identified that the first condition is satisfied (operation 615-Yes), in operation 617, the wearable electronic device 501 may display the first object 1110 in a second area corresponding to the position of the first controller 511. According to an embodiment, when the position of the first controller 511 is changed, the wearable electronic device 501 may change the display position of the first object 1110 according to the changed position of the first controller 511.

According to an embodiment, when it is identified that the first condition is not satisfied (operation 615-No), in operation 619, the wearable electronic device 501 may maintain the display position of the first object 1110 in the first area. According to an embodiment, the wearable electronic device 501 may identify that the first condition is not satisfied when it is identified that the one surface of the first controller 511 does not face the first object 1110 or the one surface of the first controller 511 is not positioned within the designated distance from the first object 1110. For example, the wearable electronic device 501 may identify that the first condition is not satisfied when it is identified that the lower portion of the first controller 511 (e.g., the lower portion 503 of the first controller of FIG. 4) faces the first object 1110.

According to an embodiment, the wearable electronic device 501 may also identify that the first condition is not satisfied when it is identified that the display position of the first object 1110 moves beyond the designated distance from the first controller 511 based on an input through the handler 1111 (e.g., a gesture or interaction of grabbing and moving the handler).

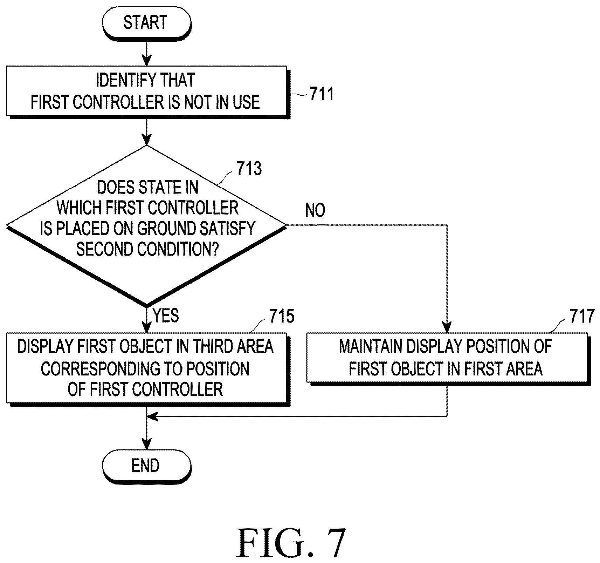

FIG. 7 is a flowchart illustrating an operation of a wearable electronic device determining a display position of a first object according to whether a second condition is satisfied according to an embodiment.

In the following embodiment, each operation may be performed sequentially, but is not necessarily performed sequentially. For example, the order of the operations may be changed, and at least two operations may be performed in parallel.

According to an embodiment, the wearable electronic device 501 (e.g., the wearable electronic device 501 of FIG. 5) may communicatively connect with the first controller 511 (e.g., the first controller 511 of FIG. 5) of the wearable electronic device 501. According to an embodiment, the wearable electronic device 501 may display the first object (1110 of FIG. 11A) in a first area through the display 560 (e.g., the display 560 of FIG. 5).

Referring to FIG. 7, according to an embodiment, in operation 711, the wearable electronic device 501 may identify that the first controller 511 is not in use. For example, the wearable electronic device 501 may identify that the first controller 511 is not in use based on sensing information (e.g., acceleration information) obtained from the first controller 511. According to an embodiment, the wearable electronic device 501 may identify that the first controller 511 is not in use when it is identified through the camera 580 (e.g., the camera 580 of FIG. 5) that the first controller 511 is placed on the ground.

According to an embodiment, in operation 713, the wearable electronic device 501 may identify whether a state in which the first controller 511 is placed on the ground satisfies a designated second condition through the camera 580 (e.g., the camera 580 of FIG. 5). According to an embodiment, the second condition may mean a state in which one surface of the first controller 511 contacts the ground and another surface of the first controller 511 does not contact the ground. For example, the one surface of the first controller 511 may mean the upper portion of the first controller 511 (e.g., the upper portion 502 of the first controller of FIG. 4), and the other surface of the first controller 511 may mean the lower portion of the first controller 511 (e.g., the lower portion 503 of the first controller of FIG. 4). However, this is an example, and the one surface and the other surface of the first controller 511 are not limited to the upper portion 502 and the lower portion 503.

According to an embodiment, when it is identified that the second condition is satisfied (operation 713-Yes), in operation 715, the wearable electronic device 501 may display the first object 1110 in a third area corresponding to the position of the first controller 511. For example, the wearable electronic device 501 may identify the position of the first controller 511 through the camera 580.

According to an embodiment, when it is identified that the second condition is not satisfied (713-No), in operation 717, the wearable electronic device 501 may maintain the display position of the first object 1110 in the first area.

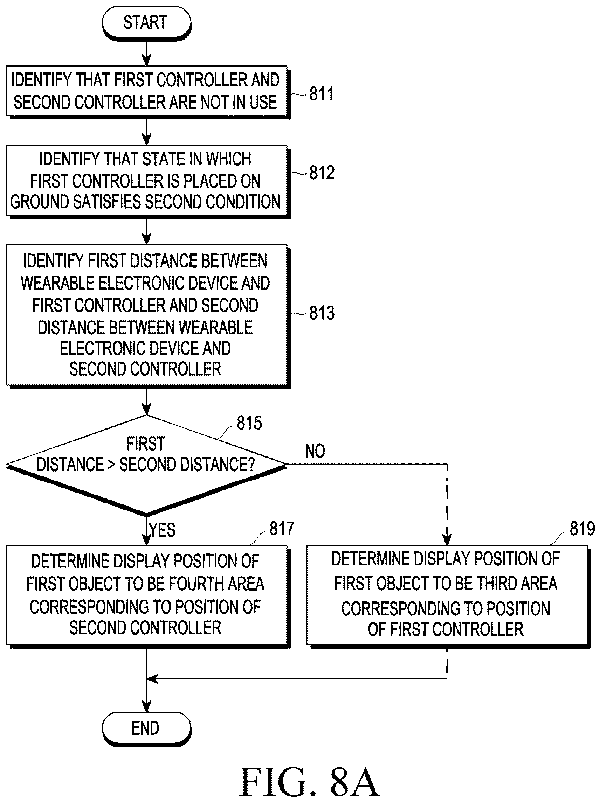

FIG. 8A is a flowchart illustrating an operation of a wearable electronic device determining a display position of a first object by comparing a distance between a first controller and the wearable electronic device and a distance between a second controller and the wearable electronic device according to an embodiment.

In the following embodiment, each operation may be performed sequentially, but is not necessarily performed sequentially. For example, the order of the operations may be changed, and at least two operations may be performed in parallel.

According to an embodiment, the wearable electronic device 501 (e.g., the wearable electronic device 501 of FIG. 5) may communicatively connect with the first controller 511 (e.g., the first controller 511 of FIG. 5) and the second controller 512 (e.g., the second controller 512 of FIG. 5). According to an embodiment, the wearable electronic device 501 may display the first object (1110 of FIG. 11A) in a first area through the display 560 (e.g., the display 560 of FIG. 5). For example, the second controller 512 may be implemented as a keyboard or a mouse.

Referring to FIG. 8A, according to an embodiment, in operation 811, the wearable electronic device 501 may identify that the first controller 511 and the second controller 512 are not in use. For example, the wearable electronic device 501 may identify that the first controller 511 is not in use when it is identified that the first controller 511 has not moved for a designated time. For example, the wearable electronic device 501 may identify that the first controller 511 is not in use based on sensing information (e.g., acceleration sensor information and/or gyro sensor information) obtained by a sensor of the first controller 511. For example, the wearable electronic device 501 may also identify that the first controller 511 is not in use when it is identified through the camera 580 (e.g., the camera 580 of FIG. 5) that the first controller 511 is placed on the ground. For example, the wearable electronic device 501 may identify that the second controller 512 is not in use when it is identified that there has been no input to the second controller 512 for a designated time. For example, the wearable electronic device 501 may identify that the second controller 512 is not in use when input information is not obtained from the second controller 512 for a designated time through the communication circuit 590.

According to an embodiment, in operation 812, the wearable electronic device 501 may identify that a state in which the first controller 511 is placed on the ground satisfies the second condition. According to an embodiment, when the state in which the first controller 511 is placed on the ground does not satisfy the second condition, the wearable electronic device 501 may maintain the display position of the first object 1110 in the first area. According to the implementation, when the state in which the first controller 511 is placed on the ground does not satisfy the second condition, the wearable electronic device 501 may also determine the display position of the first object 1110 to be a fourth area corresponding to the position of the second controller 512.

According to an embodiment, in operation 813, the wearable electronic device 501 may identify a first distance between the wearable electronic device 501 and the first controller 511 and a second distance between the wearable electronic device 501 and the second controller 512.

According to an embodiment, in operation 815, the wearable electronic device 501 may compare the first distance and the second distance. The wearable electronic device 501 may identify which of the first distance and the second distance is greater. For example, the wearable electronic device 501 may identify whether the first distance is greater than the second distance.

According to an embodiment, when it is identified that the first distance is greater than the second distance (operation 815-Yes), in operation 817, the wearable electronic device 501 may determine the display position of the first object 1110 to be the fourth area corresponding to the position of the second controller 512.

According to an embodiment, when it is identified that the first distance is not greater than the second distance (operation 815-No), in operation 819, the wearable electronic device 501 may determine the display position of the first object 1110 to be the third area corresponding to the position of the first controller 511.

Accordingly, by displaying the first object 1110 in the area corresponding to the position of the controller closer to the wearable electronic device 501, the wearable electronic device 501 may allow the user wearing the wearable electronic device 301 to easily identify the position of the object representing the user interface. Accordingly, the wearable electronic device 501 may provide convenience to the user.

According to the implementation, according to an embodiment, when it is identified that the first distance is greater than the second distance, the wearable electronic device 501 may also determine the display position of the first object 1110 to be the third area corresponding to the position of the first controller 511. According to the implementation, according to an embodiment, when it is identified that the first distance is not greater than the second distance, the wearable electronic device 501 may also determine the display position of the first object 1110 to be the fourth area corresponding to the position of the second controller 512.

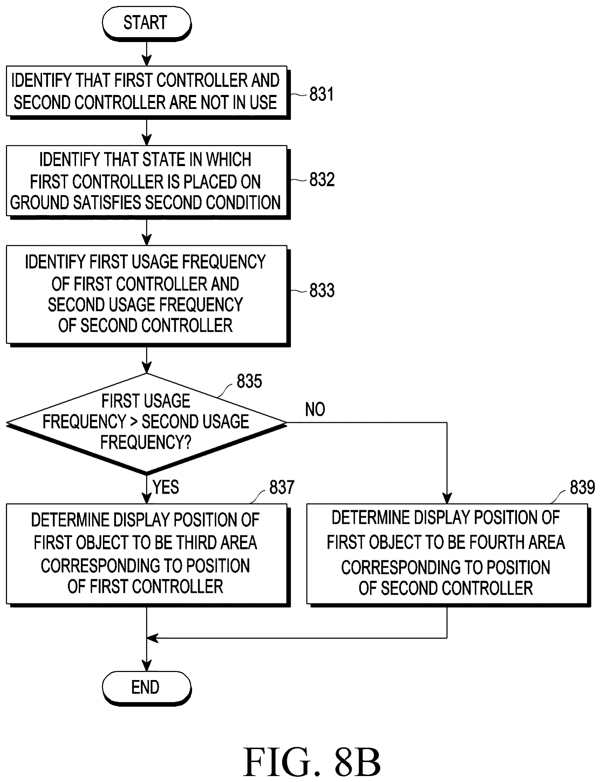

FIG. 8B is a flowchart illustrating an operation of a wearable electronic device determining a display position of a first object by comparing a usage frequency of a first controller and a usage frequency of a second controller according to an embodiment.

In the following embodiment, each operation may be performed sequentially, but is not necessarily performed sequentially. For example, the order of the operations may be changed, and at least two operations may be performed in parallel.

According to an embodiment, the wearable electronic device 501 (e.g., the wearable electronic device 501 of FIG. 5) may communicatively connect with the first controller 511 (e.g., the first controller 511 of FIG. 5) and the second controller (e.g., the second controller 512 of FIG. 5). According to an embodiment, the wearable electronic device 501 may display the first object (1110 of FIG. 11A) in a first area through the display 560 (e.g., the display 560 of FIG. 5).

Referring to FIG. 8B, according to an embodiment, in operation 831, the wearable electronic device 501 may identify that the first controller 511 and the second controller 512 are not in use.

According to an embodiment, in operation 832, the wearable electronic device 501 may identify that a state in which the first controller 511 is placed on the ground satisfies the second condition. According to an embodiment, when the state in which the first controller 511 is placed on the ground does not satisfy the second condition, the wearable electronic device 501 may maintain the display position of the first object 1110 in the first area. According to the implementation, when the state in which the first controller 511 is placed on the ground does not satisfy the second condition, the wearable electronic device 501 may also determine the display position of the first object 1110 to be an area corresponding to the position of the second controller 512.

According to an embodiment, in operation 833, the wearable electronic device 501 may identify a first usage frequency of the first controller 511 and a second usage frequency of the second controller 512. For example, the first usage frequency and the second usage frequency may mean the frequency where the first controller 511 and the second controller 512 are used as input devices for the wearable electronic device 501.

According to an embodiment, in operation 835, the wearable electronic device 501 may compare the first usage frequency and the second usage frequency. The wearable electronic device 501 may identify which of the first usage frequency and the second usage frequency is greater. For example, the wearable electronic device 501 may identify whether the first usage frequency is greater than the second usage frequency.

According to an embodiment, when it is identified that the first usage frequency is greater than the second usage frequency (operation 835-Yes), in operation 837, the wearable electronic device 501 may determine the display position of the first object 1110 to be the third area corresponding to the position of the first controller 511. In this case, the wearable electronic device 501 may display the first object in the third area corresponding to the position of the first controller 511.

According to an embodiment, when it is identified that the first usage frequency is not greater than the second usage frequency (operation 835-No), in operation 839, the wearable electronic device 501 may determine the display position of the first object to be the fourth area corresponding to the position of the second controller 512. In this case, the wearable electronic device 501 may display the first object in the fourth area corresponding to the position of the second controller 512.

Accordingly, by displaying the first object 1110 in the area corresponding to the position of the controller with higher usage frequency, the wearable electronic device 501 may allow the user wearing the wearable electronic device 301 to easily identify the position of the object of the user interface.

According to the implementation, when it is identified that the first usage frequency is greater than the second usage frequency, the wearable electronic device 501 may also determine the display position of the first object to be the fourth area corresponding to the position of the second controller 512. In this case, the wearable electronic device 501 may display the first object in the fourth area corresponding to the position of the second controller 512. According to the implementation, according to an embodiment, when it is identified that the first usage frequency is not greater than the second usage frequency, the wearable electronic device 501 may also determine the display position of the first object to be the third area corresponding to the position of the first controller 511. In this case, the wearable electronic device 501 may display the first object in the third area corresponding to the position of the second controller 511.

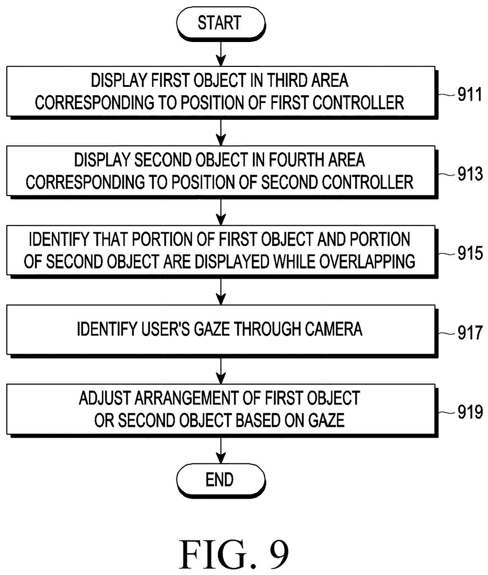

FIG. 9 is a flowchart illustrating an operation of a wearable electronic device adjusting an arrangement of a first object and a second object according to an embodiment.

In the following embodiment, each operation may be performed sequentially, but is not necessarily performed sequentially. For example, the order of the operations may be changed, and at least two operations may be performed in parallel.

Referring to FIG. 9, according to an embodiment, in operation 911, the wearable electronic device 501 (e.g., the wearable electronic device 501 of FIG. 5) may display the first object (1110 of FIG. 11A) in a third area corresponding to the position of the first controller 511 (e.g., the first controller 511 of FIG. 5). For example, the first object 1110 may mean a user interface (e.g., control menu).

According to an embodiment, in operation 913, the wearable electronic device 501 may display a virtual second object in a fourth area corresponding to the position of the second controller 512. The second object (1420 of FIG. 14B) may mean an object different from the first object 1110. For example, the second object 1420 may include a widget or an execution screen of an application. However, the second object 1420 is not limited thereto.

According to an embodiment, in operation 915, when displaying the first object 1110 and the second object 1420 together, the wearable electronic device 501 may display a portion of the first object 1110 and a portion of the second object 1420 overlapping. For example, when a portion of the first object 1110 and a portion of the second object 1420 overlap, the portion of the first object 1110 may be displayed over the portion of the second object 1420, or the portion of the second object 1420 may be displayed over the portion of the first object 1110.

According to an embodiment, in operation 917, the wearable electronic device 501 may identify the gaze of the user wearing the wearable electronic device 501 through the camera 580 (e.g., the camera 580 of FIG. 5) for a designated time.

According to an embodiment, in operation 919, the wearable electronic device 501 may adjust the arrangement of the first object 1110 or the second object 1420 based on the user's gaze. For example, when it is identified that the user's gaze is directed toward the first object 1110, the wearable electronic device 501 may display the portion of the first object 1110 over the portion of the second object 1420. For example, when it is identified that the user's gaze is directed toward the second object 1420, the wearable electronic device 501 may display the portion of the second object 1420 over the portion of the first object 110. For example, the wearable electronic device 501 may adjust the position where the first object 1110 or the second object 1420 is displayed so that the first object 1110 and the second object 1420 do not overlap. For example, the wearable electronic device 501 may move the first object 1110 or the second object 1420 in any one of the up, down, left, or right directions so that the first object 1110 and the second object 1420 do not overlap.

According to the implementation, according to an embodiment, the wearable electronic device 501 may identify that the body (e.g., hand) of the user wearing the wearable electronic device 501 is approaching the first controller 511 or the first object 1110. According to an embodiment, when it is identified that the user's body is approaching the first controller 511 or the first object 1110, the wearable electronic device 501 may display the portion of the first object 1110 over the portion of the second object 1420. According to an embodiment, the wearable electronic device 501 may identify that the body (e.g., hand) of the user wearing the wearable electronic device 501 is approaching the second controller 512 or the second object 1420. According to an embodiment, when it is identified that the user's body is approaching the second controller 512 or the second object 1420, the wearable electronic device 501 may display the portion of the second object 1420 over the portion of the first object 1110. For example, the wearable electronic device 501 may identify that the user's body is approaching the first controller 511 or the first object 1110 when the user's body is positioned within a designated distance from the first controller 511 or the first object 1110. The wearable electronic device 501 may identify that the user's body is approaching the second controller 512 or the second object 1420 when the user's body is positioned within the designated distance from the second controller 512 or the second object 1420.

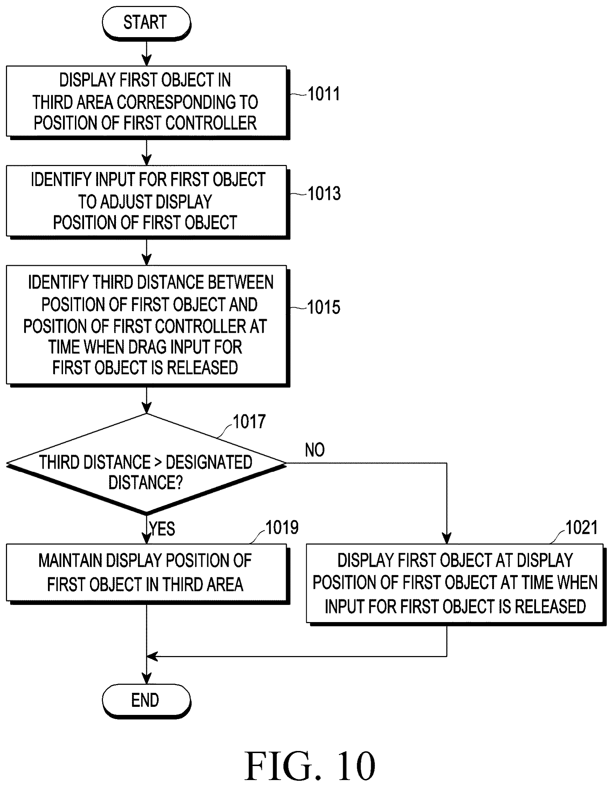

FIG. 10 is a flowchart illustrating an operation of a wearable electronic device adjusting a display position of a first object according to an embodiment.

In the following embodiment, each operation may be performed sequentially, but is not necessarily performed sequentially. For example, the order of the operations may be changed, and at least two operations may be performed in parallel.

Referring to FIG. 10, according to an embodiment, in operation 1011, the wearable electronic device 501 (e.g., the wearable electronic device 501 of FIG. 5) may display the first object (1110 of FIG. 11A) in a third area corresponding to the position of the first controller 511 based on the first controller 511 (e.g., the first controller 511 of FIG. 5) not being in use and a state in which the first controller 511 is placed on the ground satisfying the second condition.

According to an embodiment, in operation 1013, the wearable electronic device 501 may identify an input for moving the first object 1110 to adjust the display position of the first object 1110. According to an embodiment, the first object 1110 may include a handler (e.g., 1111 of FIG. 11C) capable of changing the display position of the first object 1110. For example, the input for the first object 1110 may include a drag input for moving the first object 1110 from the third area to a specific position using the handler 1111. According to an embodiment, when a drag input for the first object 1110 is identified, the wearable electronic device 501 may apply a visual effect representing the movement of the first object 1110 to the first object 1110. For example, the visual effect may be applied until the drag input is released. For example, the visual effect may include an effect of blurring the first object 1110.

According to an embodiment, in operation 1015, when the drag input for the first object 1110 is released, the wearable electronic device 501 may identify a third distance between the position of the first object 1110 moved by the drag input and the position of the first controller 511.

According to an embodiment, in operation 1017, the wearable electronic device 501 may identify whether the third distance is greater than a designated distance. For example, the designated distance may be set by the processor 520.

According to an embodiment, when it is identified that the third distance is greater than the designated distance (operation 1017-Yes), in operation 1019, the wearable electronic device 501 may maintain the display position of the first object 1110 in the existing third area.

According to an embodiment, when it is identified that the third distance is not greater than the designated distance (operation 1017-No), in operation 1021, the wearable electronic device 501 may display the first object 1110 at the position moved by the drag input.

FIG. 11A is a view illustrating a screen displayed through a display by a wearable electronic device according to an embodiment.

Referring to FIG. 11A, according to an embodiment, the wearable electronic device 501 (e.g., the wearable electronic device 501 of FIG. 5) may display the first object 1110 in a first area through the display 560 (e.g., the display 560 of FIG. 5). The first object 1110 may mean a virtual object representing a user interface. For example, the user interface may include a default menu or a universal menu provided by the wearable electronic device 501. For example, the universal menu may include a menu capable of executing a function for running applications installed on the wearable electronic device 501, a function for displaying devices communicatively connected to the wearable electronic device 501 (e.g., the first controller 511 of FIG. 5, the second controller 512), and a function for displaying the battery remaining amount of the wearable electronic device 501. However, this is an example, and the universal menu may include menus providing other various functions.

According to an embodiment, the wearable electronic device 501 may display an execution screen 1121. For example, the execution screen 1121 may mean a virtual execution screen of an application installed on the wearable electronic device 501.

For example, the first object 1110 and the execution screen 1121 may be augmented reality images displayed over a real area. In this case, the first area may be an area of the real area viewed through the glasses. Alternatively, the first area may be an area of the real area displayed on the display 560 through a camera included in the wearable electronic device 501 (e.g., the camera 580 of FIG. 5). According to the implementation, the first object 1110 and the execution screen 1121 may be virtual objects displayed over a virtual area. In this case, the first area may be an area of the virtual area viewed through the display 560.

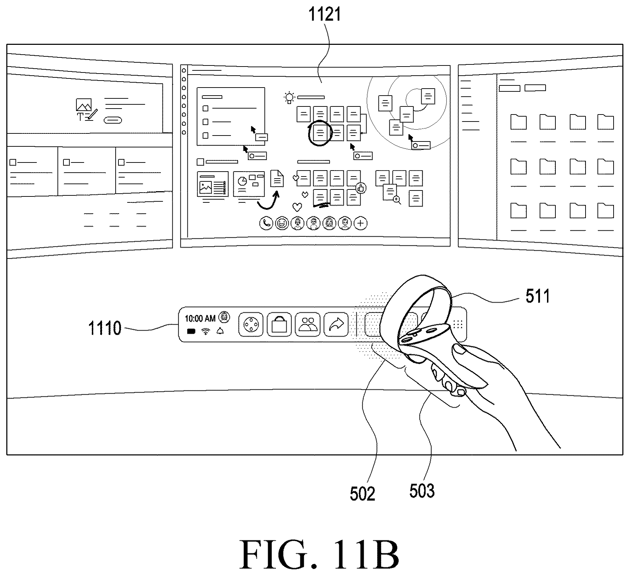

FIG. 11B is a view illustrating an operation of a wearable electronic device determining a display position of a first object according to whether a first condition is satisfied according to an embodiment.

Referring to FIG. 11B, according to an embodiment, the wearable electronic device 501 (e.g., the wearable electronic device 501 of FIG. 5) may identify that the first controller 511 (e.g., the first controller 511 of FIG. 5) is in use based on sensing information (e.g., acceleration sensor information and/or gyro sensor information) obtained from the first controller 511. According to an embodiment, the wearable electronic device 501 may also identify that the first controller 511 is in use through the camera 580 (e.g., the camera 580 of FIG. 5).

According to an embodiment, the wearable electronic device 501 may identify whether the first condition is satisfied. According to an embodiment, when it is identified that the first condition is satisfied, the wearable electronic device 501 may synchronize the display position of the first object 1110 with the position of the first controller 511. For example, the operation of synchronizing the display position of the first object 1110 with the position of the first controller 511 may mean an operation of moving the display position of the first object 1110 from an area corresponding to the first position to an area corresponding to the second position when the first controller 511 is moved from the first position to the second position. The first condition may be a condition based on a distance between the first object 1110 and the first controller 511. For example, when it is identified that the upper portion 502 of the first controller 511 faces the first object 1110 and the upper portion 502 of the first controller 511 is positioned within a designated distance from the first object 1110, the wearable electronic device 501 may identify that the first condition is satisfied.

The wearable electronic device 501 may determine not to change the display position of a specific object according to the user's settings. According to an embodiment, the wearable electronic device 501 may preset not to change the display position of the execution screen 1121 while changing the display position of the first object 1110. According to an embodiment, even when it is identified that the upper portion 502 of the first controller 511 faces the execution screen 1121 and the upper portion 502 of the first controller 511 is positioned within a designated distance from the execution screen 1121, the wearable electronic device 501 may preset not to change the display position of the execution screen 1121.

FIG. 11C is a view illustrating an operation of a wearable electronic device determining a display position of a first object according to whether a first condition is satisfied according to an embodiment.

Referring to FIG. 11C, according to an embodiment, the wearable electronic device 501 (e.g., the wearable electronic device 501 of FIG. 5) may identify that the first controller 511 (e.g., the first controller 511 of FIG. 5) is in use based on sensing information (e.g., acceleration sensor information and/or gyro sensor information) obtained from the first controller 511. According to an embodiment, the wearable electronic device 501 may also identify that the first controller 511 is in use through the camera 580 (e.g., the camera 580 of FIG. 5).

According to an embodiment, the wearable electronic device 501 may identify whether the first controller 511 satisfies the first condition. The first condition may be a condition based on a distance between the first object 1110 and the first controller 511. According to an embodiment, when it is identified that the display position of the first object 1110 moves within a designated distance from the first controller 511, the wearable electronic device 501 may identify that the first condition is satisfied. According to an embodiment, the first object 1110 may include a handler 1111 capable of changing the display position of the first object 1110. For example, the handler 1111 may be a virtual object displayed on the first object 1110. According to an embodiment, the wearable electronic device 501 may move the display position of the first object 1110 based on an input through the handler 1111 (e.g., a gesture or interaction of grabbing and moving the handler). According to an embodiment, the processor (e.g., the processor 520 of FIG. 5) may identify whether the display position of the first object 1110 moves within a designated second distance from the first controller 511. The input may include a drag input for moving the display position of the first object 1110 from the first area to a specific position using the handler 1111.

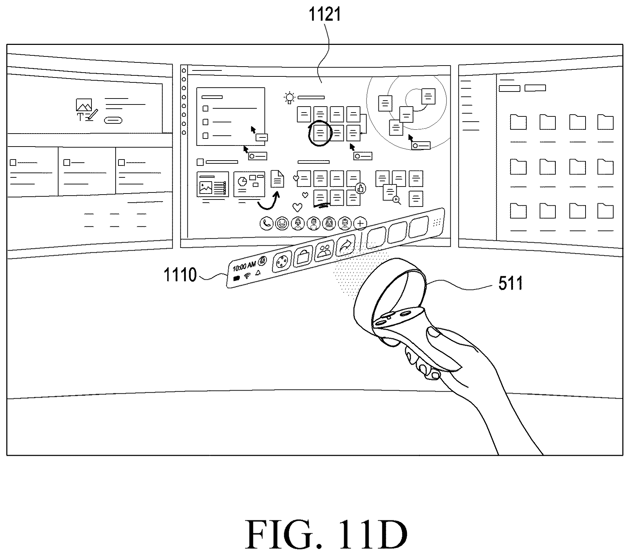

FIG. 11D is a view illustrating an operation of a wearable electronic device determining a display position of a first object to an area corresponding to the position of a first controller according to an embodiment.

Referring to FIG. 11D, according to an embodiment, when it is identified that the first controller 511 (e.g., the first controller 511 of FIG. 5) satisfies the first condition, the wearable electronic device 501 (e.g., the wearable electronic device 501 of FIG. 5) may change the display position of the first object 1110 from the first area to an area corresponding to the position of the first controller 511. In this case, the wearable electronic device 501 may apply a visual effect as if the first object 1110 sticks around the first controller 511.

According to an embodiment, the wearable electronic device 501 may synchronize the display position of the first object 1110 with the position of the first controller 511. According to an embodiment, based on the first controller 511 being moved from the first position to the second position, the wearable electronic device 501 may move the display position of the first object 1110 from an area corresponding to the first position to an area corresponding to the second position.

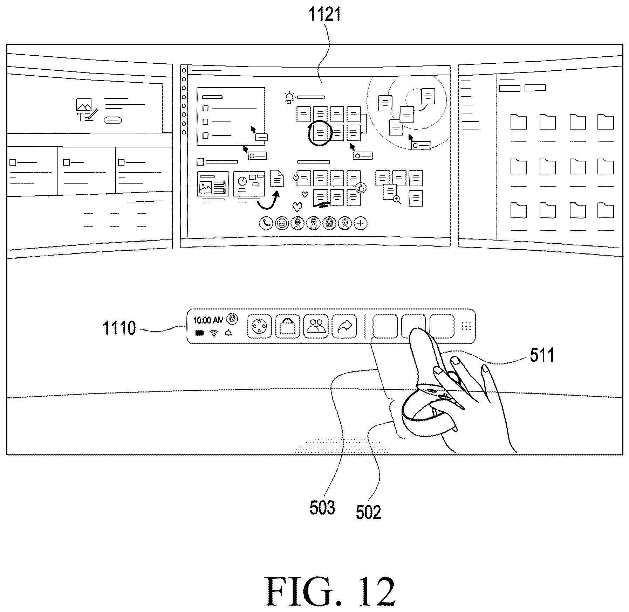

FIG. 12 is a view illustrating an operation of a wearable electronic device not changing a display position of a first object based on not satisfying a first condition according to an embodiment.

Referring to FIG. 12, according to an embodiment, the wearable electronic device 501 (e.g., the wearable electronic device 501 of FIG. 5) may identify that the first controller 511 (e.g., the first controller 511 of FIG. 5) is in use based on sensing information (e.g., acceleration information) obtained from the first controller 511. According to an embodiment, the wearable electronic device 501 may also identify that the first controller 511 is in use through the camera 580 (e.g., the camera 580 of FIG. 5).

According to an embodiment, the wearable electronic device 501 may identify whether the first condition is satisfied.

According to an embodiment, the wearable electronic device 501 may identify that the lower portion 503 of the first controller 511 faces the first object. According to an embodiment, based on identifying that the upper portion 502 of the first controller 511 does not face the first object 1110, the wearable electronic device 501 may identify that the first condition is not satisfied.

According to an embodiment, based on identifying that the first condition is not satisfied, the wearable electronic device 501 may maintain the display position of the first object 1110 in the first area.

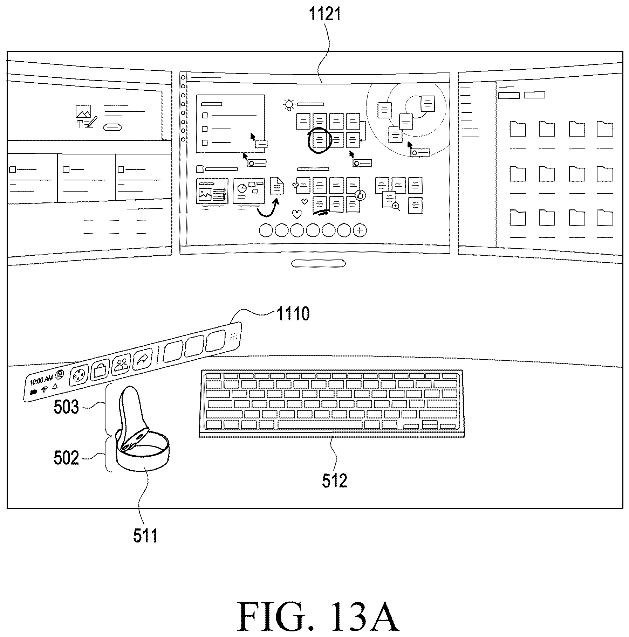

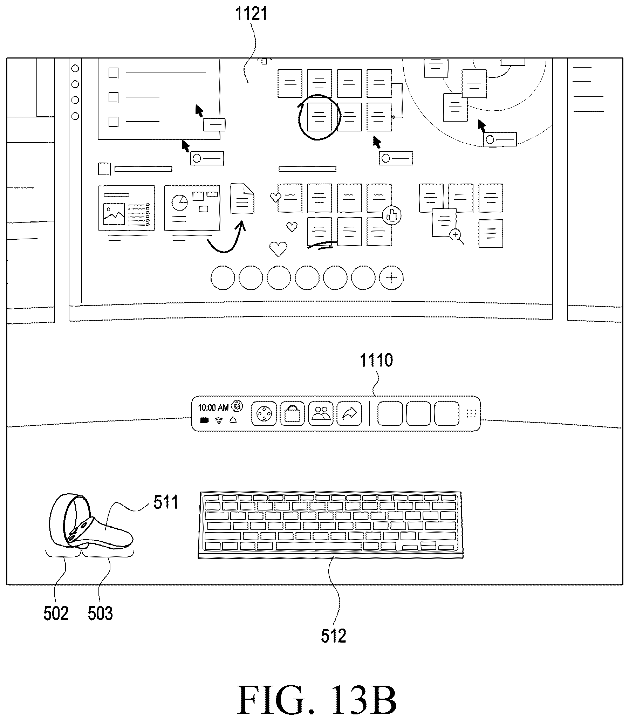

FIG. 13A is a view illustrating an operation of a wearable electronic device determining a display position of a first object to an area corresponding to the position of a first controller according to an embodiment. FIG. 13B is a view illustrating an operation of a wearable electronic device maintaining a display position of a first object in a first area based on not satisfying a second condition according to an embodiment.

Referring to FIG. 13A, according to an embodiment, the wearable electronic device 501 (e.g., the wearable electronic device 501 of FIG. 5) may identify that the first controller 511 (e.g., the first controller 511 of FIG. 5) and the second controller 512 (e.g., the second controller 512 of FIG. 5) are not in use. According to an embodiment, the wearable electronic device 501 may identify that the first controller 511 is not in use based on sensing information (e.g., acceleration sensor information and/or gyro sensor information) obtained by a sensor of the first controller 511. According to an embodiment, the wearable electronic device 501 may identify that the first controller 511 is not in use when it is identified through the camera 580 (e.g., the camera 580 of FIG. 5) that the first controller 511 is placed on the ground. According to an embodiment, the wearable electronic device 501 may identify that the second controller 512 is not in use when input information is not obtained from the second controller 512 for a designated time through the communication circuit 590 (e.g., the communication circuit 590 of FIG. 5).

According to an embodiment, the wearable electronic device 501 may identify through the camera 580 whether the state in which the first controller 511 is placed on the ground satisfies the second condition. For example, the second condition may mean a state in which the upper portion 502 of the first controller 511 contacts the ground and the lower portion 503 of the first controller 511 does not contact the ground.

According to an embodiment, based on identifying that the second condition is satisfied, the wearable electronic device 501 may display the first object 1110 in the third area corresponding to the position of the first controller 511.

Alternatively, according to an embodiment, based on identifying that the second condition is satisfied, the wearable electronic device 501 may identify the usage frequency of the first controller 511 and the usage frequency of the second controller 512. According to an embodiment, based on identifying that the usage frequency of the first controller 511 is greater than the usage frequency of the second controller 512, the wearable electronic device 501 may display the first object 1110 in the third area corresponding to the position of the first controller 511.

Alternatively, according to an embodiment, based on identifying that the second condition is satisfied, the wearable electronic device 501 may identify the distance between the first controller 511 and the wearable electronic device 501 and the distance between the second controller 512 and the wearable electronic device 501. According to an embodiment, based on identifying that the distance between the first controller 511 and the wearable electronic device 501 is shorter than the distance between the second controller 512 and the wearable electronic device 501, the wearable electronic device 501 may display the first object 1110 in the third area corresponding to the position of the first controller 511.

Referring to FIG. 13B, according to an embodiment, the wearable electronic device 501 may identify through the camera 580 that the state in which the first controller 511 is placed on the ground does not satisfy the second condition. According to an embodiment, based on identifying that the upper portion 502 and the lower portion 503 of the first controller 511 contact the ground, the wearable electronic device 501 may identify that the second condition is not satisfied.

According to an embodiment, based on identifying that the second condition is not satisfied, the wearable electronic device 501 may change the display position of the first object 1110 from the third area to the first area.

FIG. 14A and FIG. 14B are views illustrating an operation of a wearable electronic device displaying an object for displaying a second object according to an embodiment.

Referring to FIG. 14A, according to an embodiment, the system 500 (e.g., the system 500 of FIG. 5) may further include a third controller 513. The third controller 513 may be a pointing device or an input control device of the wearable electronic device 501 (e.g., the wearable electronic device 501 of FIG. 5). The third controller 513 may also be collectively referred to as an input device for augmented reality (AR) glasses, a video see through (VST) device, or an extended reality (XR) device. According to an embodiment, operations performed by the first controller 511 and the second controller 512 may be performed by the third controller 513.

According to an embodiment, the wearable electronic device 501 may communicatively connect with the third controller 513 through the communication circuit 590 (e.g., the communication circuit 590 of FIG. 5).

According to an embodiment, the wearable electronic device 501 may display the first object 1110 in an area corresponding to the position of the first controller 511. According to an embodiment, the wearable electronic device 501 may display an object 1410 for displaying the second object (e.g., the second object 1420 of FIG. 14B) in an area corresponding to the position of the second controller 512 (e.g., the second controller 512 of FIG. 5). For example, the second object 1420 may include an execution screen of an application or a widget.

According to an embodiment, the wearable electronic device 501 may identify that the state in which the third controller 513 is placed on the ground satisfies the second condition. According to an embodiment, when it is identified that one surface (e.g., upper portion) of the third controller 513 is placed on the ground and another surface (e.g., lower portion) of the third controller 513 is not placed on the ground, the wearable electronic device 501 may identify that the second condition is satisfied.

According to an embodiment, the wearable electronic device 501 may display an object 1430 for displaying the second object 1420 in an area corresponding to the position of the third controller 513.

Referring to FIG. 14B, according to an embodiment, when an input for the object 1430 is identified, the wearable electronic device 501 may display the second object 1420 in an area corresponding to the position of the third controller 513. According to an embodiment, a portion of the first object 1110 and a portion of the second object 1420 may be displayed overlapping.

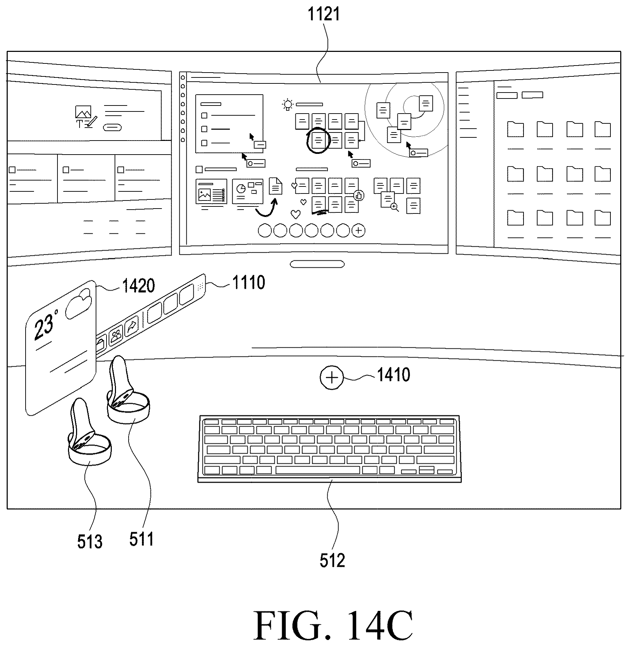

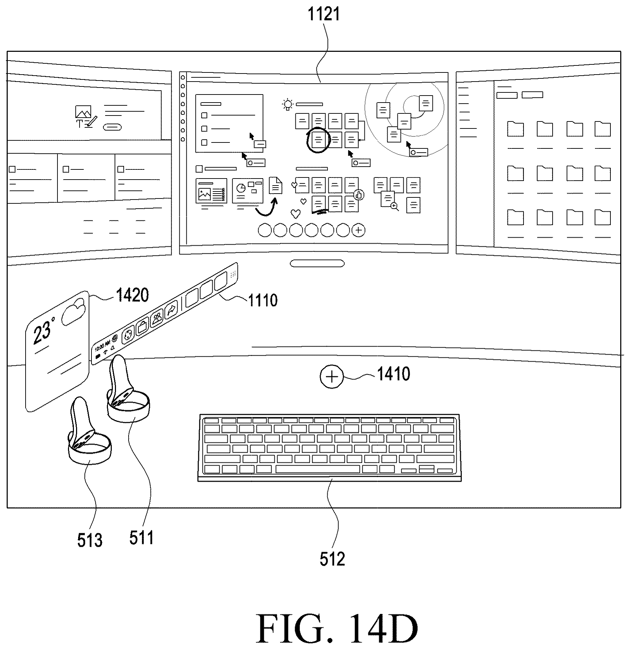

FIG. 14C and FIG. 14D are views illustrating an operation of a wearable electronic device adjusting an arrangement of a first object and a second object when the first object and the second object are identified as overlapping according to an embodiment.

According to an embodiment, when it is identified that a portion of the first object 1110 and a portion of the second object 1420 overlap, the wearable electronic device 501 (e.g., the wearable electronic device 501 of FIG. 5) may identify the gaze of the user through the camera 580 (e.g., the camera 580 of FIG. 5) for a designated time. According to an embodiment, the wearable electronic device 501 may adjust the arrangement of the first object 1110 or the second object 1420 based on the user's gaze.

Referring to FIG. 14C, according to an embodiment, based on identifying that the user's gaze is on the second object 1420, in the area where the portion of the first object 1110 and the portion of the second object 1420 overlap, the wearable electronic device 501 may not display the portion of the first object 1110 and display the portion of the second object 1420. According to an embodiment, in the area where the portion of the first object 1110 and the portion of the second object 1420 overlap, the wearable electronic device 501 may also apply a visual effect to the portion of the first object 1110 and/or the portion of the second object 1420. For example, the portion of the first object 1110 may be displayed transparently in the background area of the portion of the second object 1420. However, this is an example, and the technical spirit of the disclosure is not limited thereto. According to an embodiment, when the user's body (e.g., hand) is positioned within a designated distance from the second object 1420 or the third controller 513, when the portion of the first object 1110 and the portion of the second object 1420 overlap, the wearable electronic device 501 may display the portion of the first object 1110 over the portion of the second object 1420.

Referring to FIG. 14D, according to an embodiment, the wearable electronic device 501 may adjust the position where the first object 1110 and/or the second object 1420 is displayed so that the first object 1110 and the second object 1420 do not overlap.

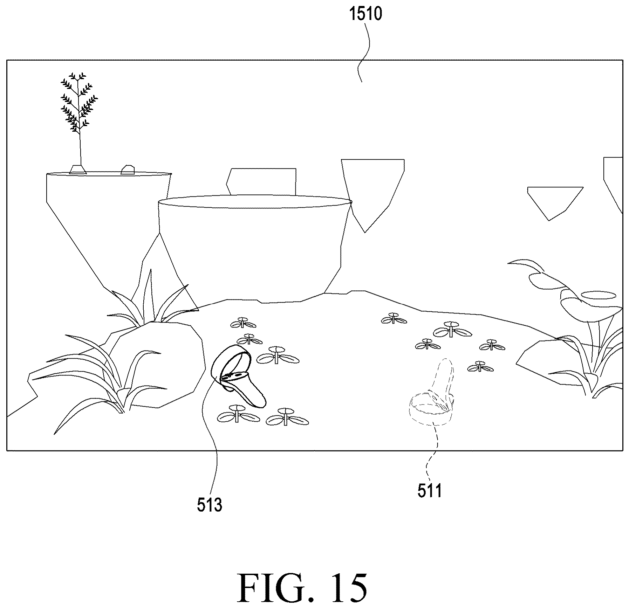

FIG. 15 is a view illustrating a screen displayed by a wearable electronic device through a display in a state in which a first controller and a third controller are not being used according to an embodiment.

Referring to FIG. 15, according to an embodiment, the wearable electronic device 501 (e.g., the wearable electronic device 501 of FIG. 5) may communicatively connect with the first controller 511 (e.g., the first controller 511 of FIG. 5) and the third controller 513 (e.g., the third controller 513 of FIG. 14A) through the communication circuit 590 (e.g., the communication circuit 590 of FIG. 5).

According to an embodiment, the wearable electronic device 501 may identify that the first controller 511 and the third controller 513 are not in use. According to an embodiment, based on identifying through the camera 580 (e.g., the camera 580 of FIG. 5) that the first controller 511 and the third controller 513 are placed on the ground, the wearable electronic device 501 may identify that the first controller 511 and the third controller 513 are not in use. According to an embodiment, the wearable electronic device 501 may also identify that the first controller 511 and the third controller 513 are not in use based on sensing information (e.g., acceleration information) obtained from the first controller 511 and sensing information (e.g., acceleration sensor information and/or gyro sensor information) obtained from the third controller 513 through the communication circuit 590.

According to an embodiment, when the first controller 511 and the third controller 513 are not in use for a designated time, the wearable electronic device 501 may display a screen 1510 through the display 560 (e.g., the display 560 of FIG. 5). For example, the screen 1510 may be a screen preset by the processor 520 (e.g., the processor 520 of FIG. 5).

According to an embodiment, the wearable electronic device 501 may identify that the state in which the first controller 511 is placed on the ground satisfies the second condition. For example, based on identifying that the upper portion 502 of the first controller 511 contacts the ground and the lower portion 503 does not contact the ground, the wearable electronic device 501 may identify that the state in which the first controller 511 is placed on the ground satisfies the second condition.

According to an embodiment, the wearable electronic device 501 may identify that the state in which the third controller 513 is placed on the ground does not satisfy the second condition. For example, based on identifying that the upper portion and the lower portion of the third controller 513 contact the ground, the wearable electronic device 501 may identify that the state in which the third controller 513 is placed on the ground does not satisfy the second condition.

According to an embodiment, based on identifying that the state in which the first controller 511 is placed on the ground satisfies the second condition, the wearable electronic device 501 may apply a visual effect to the first controller 511. For example, the wearable electronic device 501 may display the first controller 511 blurred. According to the implementation, according to an embodiment, based on identifying that the state in which the third controller 513 is placed on the ground does not satisfy the second condition, the wearable electronic device 501 may also apply a visual effect to the third controller 513.

According to an embodiment, the wearable electronic device 501 may identify whether the distance between the first controller 511 and the wearable electronic device 501 is within a designated distance. According to an embodiment, when it is identified that the distance between the first controller 511 and the wearable electronic device 501 is within the designated distance, the wearable electronic device 501 may release the visual effect applied to the first controller 511. According to an embodiment, when it is identified that the distance between the first controller 511 and the wearable electronic device 501 is not within the designated distance, the wearable electronic device 501 may not release the visual effect applied to the first controller 511.

According to an embodiment, a wearable electronic device 501 may include a memory storing instructions, a camera 580, a communication circuit 590, a display 560, and at least one processor 520.

According to an embodiment, the instructions may, when executed by the at least one processor 520, cause the wearable electronic device 501 to display, through the display 560, a virtual first object representing a user interface in a first area.

According to an embodiment, the instructions may, when executed by the at least one processor 520, cause the wearable electronic device 501 to identify whether the first controller 511 is in use based on sensing information obtained from a first controller 511 related to the wearable electronic device 501 through the communication circuit 590.

According to an embodiment, the instructions may, when executed by the at least one processor 520, cause the wearable electronic device 501 to, when the first controller 511 is identified as being in use, identify whether a first condition for setting a display position of the virtual first object to synchronize with a position of the first controller 511 identified through the camera 580 is satisfied.

According to an embodiment, the instructions may, when executed by the at least one processor 520, cause the wearable electronic device 501 to display the virtual first object in a second area corresponding to the position of the first controller 511 when the first condition is identified as being satisfied.

According to an embodiment, when a position of the first controller is changed, the display position of the virtual first object may be changed according to the changed position of the first controller 511.

According to an embodiment, the instructions may, when executed by the at least one processor 520, cause the wearable electronic device 501 to, when the first controller 511 is identified as not being in use, display the virtual first object in a third area corresponding to the position of the first controller 511 identified through the camera 580 based on a state in which the first controller is placed on the ground.

According to an embodiment, the instructions may, when executed by the at least one processor 520, cause the wearable electronic device 501 to, when the first condition is identified as not being satisfied while the first controller 511 is in use, maintain the display position of the virtual first object in the first area.

According to an embodiment, the instructions may, when executed by the at least one processor 520, cause the wearable electronic device 501 to, when it is identified that one surface of the first controller 511 faces the virtual first object and the one surface of the first controller 511 is positioned within a designated distance from the virtual first object, identify that the first condition is satisfied.

According to an embodiment, the instructions may, when executed by the at least one processor 520, cause the wearable electronic device 501 to, when it is identified that the display position of the virtual first object moves within a designated distance from the first controller 511, identify that the first condition is satisfied.

According to an embodiment, the instructions may, when executed by the at least one processor 520, cause the wearable electronic device 501 to, when the first controller 511 is identified as not being in use, identify whether the first controller 511 is placed on the ground through the camera 580.

According to an embodiment, the instructions may, when executed by the at least one processor 520, cause the wearable electronic device 501 to, when it is identified that the first controller is placed on the ground and the first controller satisfies a designated second condition, display the virtual first object in the third area.

According to an embodiment, the instructions may, when executed by the at least one processor 520, cause the wearable electronic device 501 to, when it is identified that the first controller is placed on the ground and the first controller does not satisfy the second condition, display the virtual first object in the first area.

According to an embodiment, the instructions may, when executed by the at least one processor 520, cause the wearable electronic device 501 to identify a second controller 512 communicatively connected through the communication circuit 590 and related to the wearable electronic device 501.

According to an embodiment, the instructions may, when executed by the at least one processor 520, cause the wearable electronic device 501 to, when the first controller 511 and the second controller 512 are identified as not being in use, display the virtual first object in the third area or a fourth area corresponding to the position of the second controller.

According to an embodiment, the instructions may, when executed by the at least one processor 520, cause the wearable electronic device 501 to identify a first usage frequency of the first controller 511 and a second usage frequency of the second controller 512.

According to an embodiment, the instructions may, when executed by the at least one processor 520, cause the wearable electronic device 501 to, when the first usage frequency is identified as being greater than the second usage frequency, display the virtual first object in the third area.

According to an embodiment, the instructions may, when executed by the at least one processor 520, cause the wearable electronic device 501 to identify a first distance between the wearable electronic device 501 and the first controller 511 and a second distance between the wearable electronic device 501 and the second controller 512.

According to an embodiment, the instructions may, when executed by the at least one processor 520, cause the wearable electronic device 501 to, when the first distance is identified as being shorter than the second distance, display the virtual first object in the third area.

According to an embodiment, the instructions may, when executed by the at least one processor 520, cause the wearable electronic device 501 to, when a command for changing the display position of the virtual first object to the fourth area is identified, change the display position of the virtual first object from the third area to the fourth area.

According to an embodiment, the instructions may, when executed by the at least one processor 520, cause the wearable electronic device 501 to display the virtual first object in the third area based on the display position of the virtual first object being determined to be the third area.

According to an embodiment, the instructions may, when executed by the at least one processor 520, cause the wearable electronic device 501 to display the virtual second object in the fourth area based on a command to display a virtual second object in the fourth area.

According to an embodiment, the instructions may, when executed by the at least one processor 520, cause the wearable electronic device 501 to, when at least a portion of the first object and at least a portion of the virtual second object are identified as overlapping, adjust an arrangement between the first object and the virtual second object based on a user's gaze identified through the camera 580.

According to an embodiment, the instructions may, when executed by the at least one processor 520, cause the wearable electronic device 501 to adjust a position where the first object or the second object is displayed so that the virtual first object and the virtual second object do not overlap.

According to an embodiment, a method of operating the wearable electronic device 501 may include an operation of displaying a virtual first object representing a user interface in a first area through the display of the wearable electronic device.

According to an embodiment, the method of operating the wearable electronic device 501 may include an operation of identifying whether the first controller is in use based on sensing information obtained from a first controller 511 related to the wearable electronic device 501 through the communication circuit 590 of the wearable electronic device 501.

According to an embodiment, the method of operating the wearable electronic device 501 may include an operation of, when the first controller is identified as being in use, identifying whether a first condition for setting the display position of the first object to synchronize with the position of the first controller identified through the camera of the wearable electronic device is satisfied.

According to an embodiment, the method of operating the wearable electronic device 501 may include an operation of, when the first condition is identified as being satisfied, displaying the virtual first object in a second area corresponding to the position of the first controller 511.

According to an embodiment, in the method of operating the wearable electronic device 501, when the position of the first controller 511 is changed, the display position of the virtual first object may be changed according to the changed position of the first controller 511.

According to an embodiment, the method of operating the wearable electronic device 501 may include an operation of, when the first controller 511 is identified as not being in use, displaying the first object in a third area corresponding to the position of the first controller 511 identified through the camera based on a state in which the first controller is placed on the ground.

According to an embodiment, the method of operating the wearable electronic device 501 may include an operation of, when the first condition is identified as not being satisfied while the first controller 511 is in use, maintaining the display position of the virtual first object in the first area.

According to an embodiment, the method of operating the wearable electronic device 501 may include an operation of, when it is identified that one surface of the first controller 511 faces the virtual first object and the one surface of the first controller 511 is positioned within a designated distance from the virtual first object, identifying that the first condition is satisfied.

According to an embodiment, the method of operating the wearable electronic device 501 may include an operation of, when it is identified that the display position of the virtual first object moves within a designated distance from the first controller 511, identifying that the first condition is satisfied.

According to an embodiment, the method of operating the wearable electronic device 501 may include an operation of, when the first controller 511 is identified as not being in use, identifying whether the first controller is placed on the ground through the camera.

According to an embodiment, the method of operating the wearable electronic device 501 may include an operation of, when it is identified that the first controller is placed on the ground and the first controller satisfies a designated second condition, displaying the virtual first object in the third area.

According to an embodiment, the method of operating the wearable electronic device 501 may include an operation of, when it is identified that the first controller is placed on the ground and the first controller does not satisfy the second condition, displaying the virtual first object in the first area.

According to an embodiment, the method of operating the wearable electronic device 501 may include an operation of identifying a second controller 512 related to the wearable electronic device 501 and communicatively connected through the communication circuit 590.

According to an embodiment, the method of operating the wearable electronic device 501 may include an operation of, when the first controller 511 and the second controller 512 are identified as not being in use, displaying the virtual first object in the third area or a fourth area corresponding to the position of the second controller.

According to an embodiment, the method of operating the wearable electronic device 501 may include an operation of identifying a first usage frequency of the first controller 511 and a second usage frequency of the second controller 512.

According to an embodiment, the method of operating the wearable electronic device 501 may include an operation of, when the first usage frequency is identified as being greater than the second usage frequency, displaying the virtual first object in the third area.

According to an embodiment, the method of operating the wearable electronic device 501 may include an operation of identifying a first distance between the wearable electronic device 501 and the first controller 511 and a second distance between the wearable electronic device 501 and the second controller 512.

According to an embodiment, the method of operating the wearable electronic device 501 may include an operation of, when the first distance is identified as being shorter than the second distance, displaying the virtual first object in the third area.

According to an embodiment, the method of operating the wearable electronic device 501 may include an operation of, when a command for changing the display position of the virtual first object to the fourth area is identified, changing the display position of the virtual first object from the third area to the fourth area through the display 560.

According to an embodiment, the method of operating the wearable electronic device 501 may include an operation of displaying the first object in the third area based on the display position of the virtual first object being determined to be the third area.

According to an embodiment, the method of operating the wearable electronic device 501 may include an operation of displaying the virtual second object in the fourth area based on a command to display a virtual second object in the fourth area.

According to an embodiment, the method of operating the wearable electronic device 501 may include an operation of, when at least a portion of the virtual first object and at least a portion of the virtual second object are identified as overlapping, adjusting an arrangement between the virtual first object and the virtual second object based on a user's gaze identified through the camera 580.

According to an embodiment, the method of operating the wearable electronic device 501 may include an operation of adjusting at least one of the display position of the first object or the position of the second object so that the virtual first object and the virtual second object do not overlap.

According to an embodiment, a non-transitory recording medium may store an instruction executable to display a virtual first object representing a user interface in a first area through the display 560 of the wearable electronic device 501.

According to an embodiment, the non-transitory recording medium may store an instruction executable to identify whether the first controller is in use based on sensing information obtained from a first controller 511 related to the wearable electronic device 501 through the communication circuit 590 of the wearable electronic device 501.

According to an embodiment, the non-transitory recording medium may store an instruction executable to, when the first controller 511 is identified as being in use, identify whether a first condition for setting the display position of the virtual first object to synchronize with the position of the first controller 511 identified through the camera 580 of the wearable electronic device 501 is satisfied.

According to an embodiment, the non-transitory recording medium may store an instruction executable to, when the first condition is identified as being satisfied, display the virtual first object in a second area corresponding to the position of the first controller 511.

According to an embodiment, in the non-transitory recording medium, when the position of the first controller 511 is changed, the display position of the virtual first object may be changed according to the changed position of the first controller.

According to an embodiment, the non-transitory recording medium may store an instruction executable to, when the first controller 511 is identified as not being in use, display the virtual first object in a third area corresponding to the position of the first controller 511 identified through the camera 580 based on a state in which the first controller 511 is placed on the ground.

According to an embodiment, the non-transitory recording medium may store an instruction executable to, when the first condition is identified as not being satisfied while the first controller 511 is in use, maintain the display position of the virtual first object in the first area.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic device is not limited to the above-listed embodiments.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101, 200, 300, or 501). For example, a processor (e.g., the processor 120 or 520) of the machine (e.g., the electronic device 101, 200, 300, or 501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable electronic device (101 of FIG. 1; 200 of FIG. 2; 300 of FIGS. 3A and 3B; 501 of FIG. 5) comprising:
memory (130 of FIG. 1) storing instructions;
a camera (180 of FIG. 1; 250 of FIG. 2; 311, 312, 313, 314, 315, 316 of FIG. 3; 350 of FIG. 5);
a communication circuit (190 of FIG. 1; 590 of FIG. 5);
a display (160 of FIG. 1; 201 of FIG. 2; 321 of FIG. 3; 360 of FIG. 5); and
at least one processor (120 of FIG. 1; 520 of FIG. 5),
wherein the instructions, when executed by the at least one processor, cause the wearable electronic device to:
display, through the display, a virtual first object representing a user interface in a first area,
based on sensing information obtained from a first controller (511 of FIG. 5) related to the wearable electronic device through the communication circuit, identify whether the first controller is in use,
based on identifying that the first controller is in use, identify whether the first controller satisfies a first condition for setting a display position of the virtual first object to synchronize with a position of the first controller identified through the camera, wherein the first condition is based on a distance between the virtual first object and the first controller,
based on identifying that the first condition is satisfied, display the virtual first object in a second area corresponding to the position of the first controller, wherein when the position of the first controller is changed, the display position of the virtual first object is changed according to a changed position of the first controller,
based on identifying that the first controller is not in use, display the virtual first object in a third area corresponding to the position of the first controller identified through the camera based on a state in which the first controller is placed on a ground, and
based on identifying that the first condition is not satisfied while the first controller is in use, maintain the display position of the virtual first object in the first area.

2. The wearable electronic device of claim 1, wherein the instructions, when executed by the at least one processor, cause the wearable electronic device to,
based on identifying that one surface of the first controller faces the virtual first object and the one surface of the first controller is located within a designated distance from the virtual first object, identify that the first condition is satisfied.

3. The wearable electronic device of any one of claims 1 to 2, wherein the instructions, when executed by the at least one processor, cause the wearable electronic device to,
based on identifying that the display position of the virtual first object moves within a designated distance from the first controller, identify that the first condition is satisfied.

4. The wearable electronic device of any one of claims 1 to 3, wherein the instructions, when executed by the at least one processor, cause the wearable electronic device to,
based on identifying that the first controller is not in use, identify, through the camera, whether the first controller is placed on the ground, and
based on identifying that the first controller is placed on the ground and the first controller satisfies a designated second condition, display the virtual first object in the third area.

5. The wearable electronic device of any one of claims 1 to 4, wherein the instructions, when executed by the at least one processor, cause the wearable electronic device to,
based on identifying that the first controller is placed on the ground and does not satisfy the second condition, display the virtual first object in the first area.

6. The wearable electronic device of any one of claims 1 to 5, wherein the instructions, when executed by the one processor, cause the wearable electronic device to,
identify a second controller (512 of FIG. 5) communicatively connected through the communication circuit, and
based on identifying that the first controller and the second controller are not in use, display the virtual first object in the third area or a fourth area corresponding to a position of the second controller.

7. The wearable electronic device of any one of claims 1 to 6, wherein the instructions, when executed by the one processor, cause the wearable electronic device to,
identify a first usage frequency of the first controller and a second usage frequency of the second controller, and
based on identifying that the first usage frequency is greater than the second usage frequency, display the virtual first object in the third area.

8. The wearable electronic device of any one of claims 1 to 7, wherein the instructions, when executed by the one processor, cause the wearable electronic device to,
identify a first distance between the wearable electronic device and the first controller, and a second distance between the wearable electronic device and the second controller, and
based on identifying that the first distance is shorter than the second distance, display the virtual first object in the third area.

9. The wearable electronic device of any one of claims 1 to 8, wherein the instructions, when executed by the one processor, cause the wearable electronic device to,
based on identifying a command for changing the display position of the virtual first object from the third area to the fourth area, change the display position of the virtual first object from the third area to the fourth area.

10. The wearable electronic device of any one of claims 1 to 9, wherein the instructions, when executed by the one processor, cause the wearable electronic device to,
based on identifying that a part of the virtual first object overlaps a part of the second object, adjust an arrangement between the first object and the second object based on a user's gaze identified through the camera.

11. The wearable electronic device of any one of claims 1 to 10, wherein the instructions, when executed by the one processor, cause the wearable electronic device to,
adjust at least one of the display position of the virtual first object or a display position of the virtual second object so that the virtual first object and the virtual second object do not overlap.

12. A method of operating a wearable electronic device (101 of FIG. 1; 200 of FIG. 2; 300 of FIGS. 3A and 3B; 501 of FIG. 5), the method comprising:
displaying, through a display (160 of FIG. 1; 201 of FIG. 2; 321 of FIG. 3; 360 of FIG. 5) of the wearable electronic device, a virtual first object representing a user interface in a first area;
based on sensing information obtained from a first controller (511 of FIG. 5) related to the wearable electronic device through a communication circuit (190 of FIG. 1; 590 of FIG. 5) of the wearable electronic device, identifying whether the first controller is in use;
based on identifying that the first controller is in use, identifying whether a first condition for setting a display position of the virtual first object to synchronize with a position of the first controller identified through a camera (180 of FIG. 1; 250 of FIG. 2; 311, 312, 313, 314, 315, 316 of FIG. 3; 350 of FIG. 5) of the wearable electronic device is satisfied, wherein the first condition is based on a distance between the virtual first object and the first controller,
based on identifying that the first condition is satisfied, displaying the virtual first object in a second area corresponding to the position of the first controller, wherein when the position of the first controller is changed, the display position of the virtual first object is changed according to a changed position of the first controller;
based on identifying that the first controller is not in use, displaying the virtual first object in a third area corresponding to the position of the first controller identified through the camera based on a state in which the first controller is placed on a ground; and
based on identifying that the first condition is not satisfied while the first controller is in use, maintaining the display position of the virtual first object in the first area.

13. The method of claim 12, wherein identifying whether the first condition is satisfied includes, based on identifying that one surface of the first controller faces the virtual first object and the one surface of the first controller is positioned within a designated distance from the virtual first object, identifying that the first condition is satisfied.

14. The method of claim 12 or 13, wherein identifying whether the first condition is satisfied includes, based on identifying that the display position of the virtual first object moves within a designated distance from the first controller, identifying that the first condition is satisfied.

15. A non-transitory recording medium storing at least one instruction executable to:
display, through a display (160 of FIG. 1; 201 of FIG. 2; 321 of FIG. 3; 360 of FIG. 5) of a wearable electronic device (101 of FIG. 1; 200 of FIG. 2; 300 of FIGS. 3A and 3B; 501 of FIG. 5), a virtual first object representing a user interface in a first area;
based on sensing information obtained from a first controller (511 of FIG. 5) related to the wearable electronic device through a communication circuit (190 of FIG. 1; 590 of FIG. 5) of the wearable electronic device, identify whether the first controller is in use;
based on identifying that the first controller is in use, identify whether a first condition for setting a display position of the virtual first object to synchronize with a position of the first controller identified through a camera of the wearable electronic device is satisfied, wherein the first condition is based on a distance between the virtual first object and the first controller,
based on identifying that the first condition is satisfied, display the virtual first object in a second area corresponding to the position of the first controller, wherein when the position of the first controller is changed, the display position of the virtual first object is changed according to a changed position of the first controller;
based on identifying that the first controller is not in use, display the virtual first object in a third area corresponding to the position of the first controller identified through the camera based on a state in which the first controller is placed on a ground; and
based on identifying that the first condition is not satisfied while the first controller is in use, maintain the display position of the virtual first object in the first area.
